# EUROPEAN PATENT APPLICATION

(11) **EP 2 282 525 A1**
(43) Date of publication of application: **09.02.2011**
(21) Application number: 09749425.6
(22) Date of filing: 23.04.2009
(51) Int. Cl.: H04N 5/265

(54) **METHOD, DEVICE AND SYSTEM FOR REALIZING MEDIA CONTENT INSERTING IN IPTV**

(30) Priority: 21.05.2008 CN 200810100674
(71) Applicant: Huawei Technologies Co., Ltd., Longgang District, Shenzhen Guangdong 518129 (CN)
(72) Inventor: ZHU, Wenming, Longgang District 518129, Shenzhen (CN); QI, Baojian, Longgang District 518129, Shenzhen (CN); SHI, Youzhu, Longgang District 518129, Shenzhen (CN)
(74) Representative: Kreuz, Georg Maria
(86) International application number: PCT/CN2009/071433
(87) International publication number: WO 2009/140882

(57) **Abstract**

In the field of network interconnection, a method, device, and system for inserting media content in an Internet Protocol Television (IPTV) are provided, so as to solve a problem in the prior art that program broadcasting is performed for all audiences in an area only. The method for inserting the media content in the IPTV includes: receiving content insertion information; obtaining second media content that matches user information; and sending the second media content to a User Equipment (UE) according to the content insertion information. Thus, a program can be inserted according to requirements and characteristics of a user.

## Description

The application claims the benefit of priority to Chinese Patent Application No. 200810100674.3, filed on May 21, 2008, and entitled "METHOD, DEVICE, AND SYSTEM FOR Inserting MEDIA CONTENT IN IPTV", which is incorporated herein by reference in its entirety.

### FIELD OF THE TECHNOLOGY

The present invention relates to the field of network interconnection, and more particularly to a method, device, and system for inserting media content in an Internet Protocol Television (IPTV).

### BACKGROUND OF THE INVENTION

An IPTV based on an IP Multimedia Subsystem (IMS) network is a multimedia service introduced over IMS network architecture, and the service is implemented by enhancing IMS network entities and interfaces, including extending the IMS network entities and interface protocols, and refining and enhancing capabilities of an Application Server (AS). Various IPTV basic services, including Content on Demand (CoD), Broadcast (BC), and Network-Personal Video Recorder (N-PVR), are implemented, and various enhanced services, for example, Pay Per View (PPV) subscription, advertisement services, and recommendation services, may be provided for User Equipment (UE) by exchanging and controlling UE data and content data, thereby improving viewing experience of the UE.

With the diversification of propagation media, in order to maximize the advertising benefit, advertisers begin to focus on analyzing audiences of the advertisement, so as to improve the hit rate and profit of the advertisement. It is analyzed from psychology of terminal users that the terminal users hate television advertisements that are irrelevant to them, but do not mind those capable of offering help to them.

An existing program insertion technique is based on area broadcasting, and in this manner, program insertion information is obtained from a media stream, and the program broadcasting is only performed for all audiences in an area, that is, the program can only be inserted according to territorial features of the target UE. Practically, user characteristics not only include the territory, but also include age, gender, occupation, religion, and income of the terminal user. The programs which all the terminal users intend to receive, for example, advertisement publicity and program pushing, may satisfy requirements and characteristics of the terminal users. Apparently, in the prior art, the broadcasting is performed only based on the territorial features, which may not satisfy such commercial requirements.

### SUMMARY OF THE INVENTION

The present invention is directed to a method, device, and system for inserting media content in an IPTV, so as to solve a problem in the prior art that program broadcasting is performed for all audiences in an area only.

In order to achieve the objectives, the present invention provides the following technical solutions:

A method for inserting media content in an IPTV is provided. The method includes the following steps.

Content insertion information is received.

Second media content that matches user information is obtained.

The second media content is sent to a UE according to the content insertion information.

A device for inserting media content in an IPTV is provided. The device includes a media unit for receiving content insertion information, a second media content obtaining unit, and an inserting unit.

The media unit for receiving content insertion information is configured to receive content insertion information.

The second media content obtaining unit is configured to obtain second media content that matches user information.

The inserting unit is configured to send the second media content to a UE according to the content insertion information.

A system for inserting media content in an IPTV is provided. The system includes a matching unit, a content insertion information providing unit, a media content inserting unit, and a media receiving unit.

The matching unit is configured to match second media content for a user, so as to obtain a matching result.

The content insertion information providing unit is configured to provide content insertion information of inserting the second media content to first media content.

The media content inserting unit is configured to insert the second media content to the first media content according to the content insertion information and the matching result.

The media receiving unit is configured to receive the first media content with the inserted second media content.

In the method, device, and system for inserting the media content in the IPTV according to the present invention, the proper second media content is selected and matched according to a main video media content of the UE, so that the content is inserted according to individualized requirements of the UE. As compared with the prior art having the program that the program broadcasting is performed for all the audiences in the area only, that is, the program can be inserted only according to territorial features of the target UE, the present invention is not only applicable to the program insertion in a BC channel, but also applicable to the individualized program insertion in CoD, and other application scenarios, so that the inserted program satisfies user preferences or user characteristics, thereby improving the user experience. Especially, during an advertisement pushing procedure, different programs may be pushed for users having different characteristics, thereby improving the pushing effect of an advertising agent, and achieving the publicity objective of the advertising agent.

### BRIEF DESCRIPTION OF THE DRAWINGS

FIG. 1 is a flow chart of a method for inserting media content in an IPTV according to an embodiment of the present invention;
FIG. 2 is a flow chart of another method for inserting media content in an IPTV according to an embodiment of the present invention;
FIG. 3 is a schematic structural view of a device for inserting media content in an IPTV according to an embodiment of the present invention;
FIG. 4 is a schematic structural view of another device for inserting media content in an IPTV according to an embodiment of the present invention;
FIG. 5 is a schematic structural view of a system for inserting media content in an IPTV according to an embodiment of the present invention;
FIG. 6 is a schematic structural view of a media content inserting unit in the system for inserting the media content in the IPTV in FIG. 5 according to an embodiment of the present invention;
FIG. 7 is a flow chart of a method for inserting media content in an IPTV according to an embodiment of the present invention;
FIG. 8 is a flow chart of another method for inserting media content in an IPTV according to an embodiment of the present invention;
FIG. 9 is a flow chart of another method for inserting media content in an IPTV according to an embodiment of the present invention;
FIG. 10 is a flow chart of another method for inserting media content in an IPTV according to an embodiment of the present invention;
FIG. 11 is a flow chart of another method for inserting media content in an IPTV according to an embodiment of the present invention;
FIG. 12 is a flow chart of another method for inserting media content in an IPTV according to an embodiment of the present invention;
FIG. 13 is a flow chart of another method for inserting media content in an IPTV according to an embodiment of the present invention;
FIG. 14 is a flow chart of another method for inserting media content in an IPTV according to an embodiment of the present invention;
FIG. 15 is a flow chart of another method for inserting media content in an IPTV according to an embodiment of the present invention; and
FIG. 16 is a flow chart of another method for inserting media content in an IPTV according to an embodiment of the present invention.

### DETAILED DESCRIPTION OF THE EMBODIMENTS

A method, device, and system for inserting media content in an IPTV according to the present invention are described in detail below with reference to the accompanying drawings.

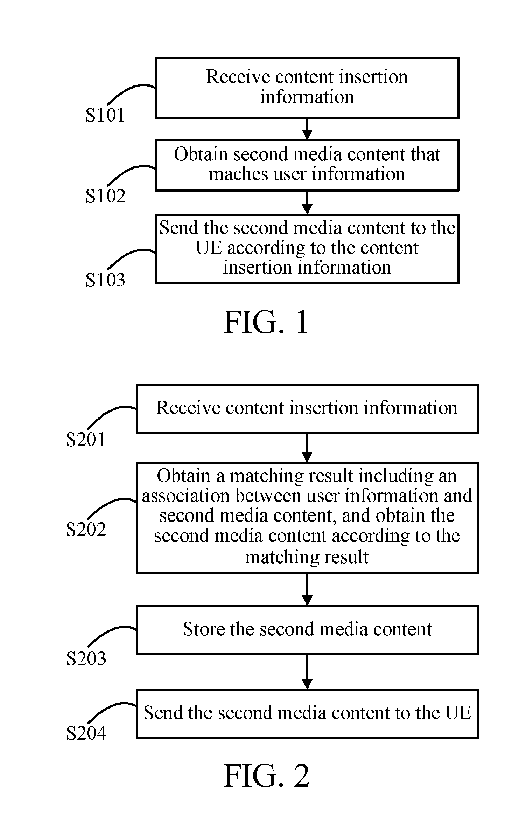

Referring to FIG. 1, in an embodiment, the present invention provides a method for inserting media content in an IPTV

S101: Receive content insertion information. The content insertion information at least includes one of the following information: an insertion identifier (ID) of second media content, insertion time information of second media content, a content type of the inserted second media content, and an ID of an inserted second media content ; and a manner of sending the content insertion information includes: sending the content insertion information through a media plane or sending the content insertion information through a signaling plane.

S102: Obtain second media content that matches user information. In this step, a matching result including an association between the user information and the second media content is obtained by establishing the association between the user information and the second media content, so as to obtain the second media content according to the matching result. The user information at least includes one of the following information: description information of first media content currently received by the UE, a user preference, user characteristic information, and UE capability. The matching result at least includes one of the following information: a second media transmission parameter, a second media content source address, a second media content ID, an ID of the first media content, a second media content insertion indicator, and information indicating an association between the user information and the second media content. The media content insertion indicator at least includes one of the following information: a second media insertion ID, insertion time, a play speed of second media content, and playing format information. The description information of the first media content currently received by the UE, for example, the first media content currently received by the UE, may be a sport program or an entertainment program. The user preference and the user characteristic information may be pre-stored in a manner of user registration.

S103: Send second media content to the UE according to the content insertion information.

Referring to FIG. 2, in an embodiment, the present invention provides another method for inserting media content in an IPTV.

S201: Receive content insertion information.

S202: Obtain a matching result including an association between user information and second media content, and obtain the second media content according to the matching result.

The procedure of obtaining the matching result may be completed after the step of receiving the content insertion information, and may also be completed before the step of receiving the content insertion information. The procedure of obtaining the matching result may include: classifying the user information; classifying the second media content; and establishing the association between the user information and the second media content of the same type, for serving as the matching result. The user information at least includes one of the following information: description information of first media content currently received by a UE, a user preference, user characteristic information, and UE capability. The description information of the first media content includes data information such as an ID of the first media content, a type of the first media content, and key words included in the first media content.

Taking the user information that is the description information of the first media content currently received by the UE as an example, the association between the user information and the second media content of the same type in the matching result is described. One piece of first media content may correspond to one second media content; and one piece of first media content may correspond to a plurality of second media content.

S203: Store the second media content.

S204: Send the second media content to the UE.

In this step, the second media content is transmitted by using a second media transmission parameter, in which the second media transmission parameter may be the same as a first media transmission parameter. If the second media content is transmitted by using a new media transmission parameter, the step further includes: negotiating a media transmission parameter; and sending the second media content to the user by using the new media transmission parameter.

In the step of sending the second media content to the UE by using the media transmission parameter, the second media content and the first media content are sent to the UE together by using the first media transmission parameter; or the sending of the first media content is stopped, and the second media content is sent to the UE by using the first media transmission parameter; or the second media content is sent to the UE by using the second media transmission parameter.

The second media content is displayed according to the content insertion information. In this step, the second media content is displayed after being inserted to a main video media content according to the content insertion information; or the second media content is displayed after overlapping the first media content in full-screen according to the content insertion information; or the second media content is displayed after partially overlapping the first media content according to the content insertion information.

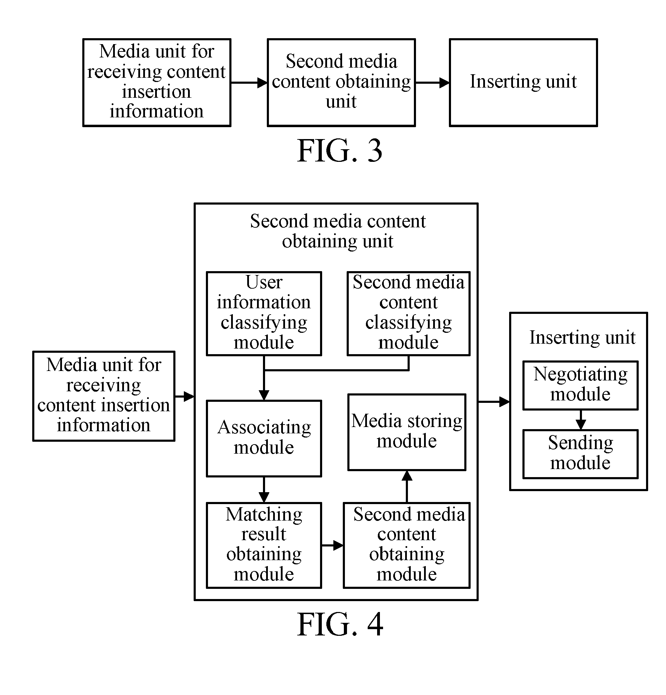

Referring to FIG. 3, in an embodiment, the present invention provides a device for inserting media content in an IPTV. The device includes a media unit for receiving content insertion information, a second media content obtaining unit, and an inserting unit.

The media unit for receiving content insertion information is configured to receive content insertion information.

The second media content obtaining unit is configured to obtain second media content that matches user information.

The inserting unit is configured to send the second media content to the UE according to the content insertion information.

Referring to FIG. 4, in an embodiment, the present invention provides another device for inserting media content in an IPTV. The device includes a media unit for receiving content insertion information, a second media content obtaining unit, and an inserting unit.

The media unit for receiving content insertion information is configured to receive content insertion information.

The second media content obtaining unit is configured to obtain second media content that matches user information. The unit includes a matching result obtaining module and a second media content obtaining module.

The matching result obtaining module is configured to obtain a matching result including an association between the user information and the second media content.

The second media content obtaining module is configured to obtain the second media content that matches the user information according to the matching result. The second media content may include one or more types of media content, which may be advertisements appropriate to be viewed by people of different ages, genders, occupations, religions, and incomes, and may also be trailers of television programs.

Further, the second media content obtaining unit further includes a user information classifying module, a second media content classifying module, an associating module, and a media storing module.

The user information classifying module is configured to classify the user information.

The second media content classifying module is configured to classify the second media content.

The associating module is configured to establish the association between the user information and the second media content of the same type, for serving as the matching result.

The media storing module is configured to store the second media content, in which the second media content is obtained according to the user information.

The inserting unit is configured to insert the second media content to the first media content according to the content insertion information. The unit includes a negotiating module and a sending module.

The negotiating module is configured to negotiate the media transmission parameter. The inserting unit may perform selection and negotiation according to the selected transmission parameter. If the media transmission parameter by using which the second media content is transmitted is the first media transmission parameter, the negotiation is not required; and if the media transmission parameter by using which the second media content is transmitted is a new transmission parameter, the negotiation is required.

The sending module is configured to send the second media content to the UE by using the media transmission parameter.

The sending module may be configured to send the second media content and the first media content to the UE together by using the first media transmission parameter; or configured to stop sending the first media content, and send the second media content to the UE by using the first media transmission parameter; or configured to send the second media content to the UE by using the second media transmission parameter.

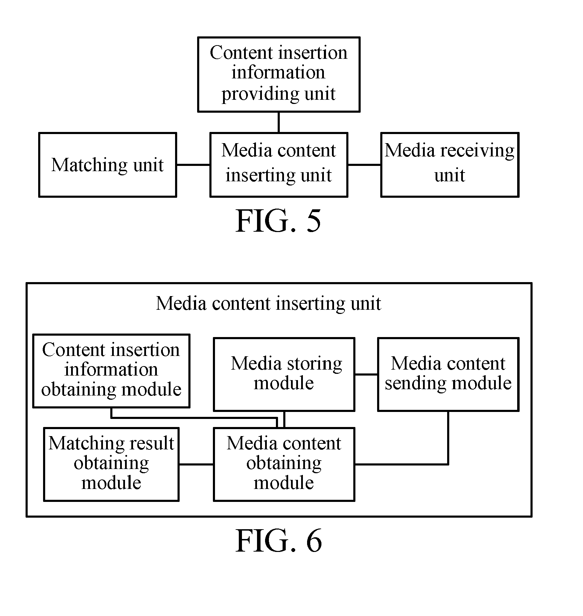

Referring to FIG. 5, in an embodiment, the present invention provides a system for inserting media content in an IPTV. The system includes a content insertion information providing unit, a matching unit, a media content inserting unit, and a media receiving unit.

The content insertion information providing unit is configured to provide content insertion information of inserting second media content to first media content. In practical applications, the content insertion information may be sent through a signaling plane or a media plane.

Manner 1: The content insertion information may be sentcontent insertion information through the media plane. The content insertion information providing unit may exist in an MDN, an IPTV Media Function (MF), an AD Server (ADS), a satellite signal receiving point, an IPTV content encoding head-end, other servers deployed in the implementation of the IPTV service, a media storage network, and other Network Elements (NEs). The content insertion information is transmitted through a media transmission channel in Motion Picture Experts Group-Transport Stream (MPEG-TS), Real-time Transport Protocol (RTP), Transmission Control Protocol (TCP), User Datagram Protocol (UDP), and other encapsulation manners. For example, the IPTV content encoding head-end provides the MPEG-TS, the content insertion information carried in the MPEG-TS may be a silent voice signal conforming to American National Standard Institute (ANSI)/Society of Cable Telecommunications Engineers (SCTE)-35 standard, and is carried together with other TS data packets, but is differentiated from other TS data packets by using a specific 0x86 packet ID. The IPTV content encoding head-end serves as an application example of the content insertion information providing unit. In another example of carrying the content insertion information, a prompt signal is encapsulated by using an RTP data packet, that is, the RTP data packet encapsulating the prompt signal is differentiated from other types of RTP data packets by using a dynamically assigned Payload Type ID bit at a packet header of the RTP data packet, and description content insertion information is carried in a main part of the RTP data packet, in which the information further includes insertion start time of the description content and insertion end time of the description content.

Manner 2: The content insertion information may be sent through the signaling plane. The content insertion information providing unit may be a separate NE, or exists in other NEs, for example, a Content Profile Server Function (CPSF), an IPTV Service Control Function (IPTV SCF), or other NEs capable of providing the content insertion information, for example, an Emergency Alert Service (EAS) Center may also send an emergency message, so as to notify that currently the first media content needs to be replaced by an emergency channel. The content insertion information is encapsulated in a Simple Object Access Protocol (SOAP) command or a message over a protocol such as HyperText Transfer Protocol (HTTP), File Transfer Protocol (FTP), DIAMETER, Session Initiation Protocol (SIP), and an internal protocol, and is sent to the media content inserting unit. For example, the CPSF provides the content insertion information of a BC channel, and the content insertion information may be described and configured in the CPSF together with other content meta data, in which the meta data of one BC channel may include a channel ID, a logic channel number, a channel classification, and a channel brief introduction, and further provide time points on which the content insertion may be performed in the BC channel. An extensible Markup Language (XML) Schema corresponding to this example is described in the following:

```
  <xs:complexType name="BCService">

  <xs:complexType>

  <xs:sequence>

  <xs: element name="TextualID" type="xs:string"/>

  <xs: element name="LogicalChannelNumber" type="xsd:positiveInteger"
 minOccurs="0"/>

  <xs:element name="Genre" type="dvb:Genre" minOccurs="0"/>

  <xs:element name="ServiceURL" type="xs:anyURI" minOccurs="1"/>

  <xs:element name="CommercialBreak" minOccurs="0">

  <xs:complexType>

  <xs:sequence>

  <xs: element name="BreakStartTime" type="xs:dateTime" minOccurs="1"/>

  <xs:choice>

  <xs:element name="BreakEndTime" type="xs:dateTime" minOccurs="0"/>

  <xs:element name="BreakLength" type="xs:string" minOccurs="0"/>

  </xs:choice>

  </xs:sequence>

  </xs:complexType>

  </xs: element>

  </xs:sequence>

  </xs:complexType>

  </xs:complexType>
```

The BCService element is used to describe XML of a signal BC channel, and the CommercialBreak element is carried in the BCService element; the CommercialBreak element is an advertisement insertion time point that possibly occurs in the single BC channel. The CommercialBreak element includes the BreakStartTime and indicates an advertisement valid time period by using the BreakEndTime or the BreakLength.

In practical applications, the XML Schema is not limited to the above format, but the common objective is to enable the content meta data of the BC channel to describe the advertisement content insertion information, so that the advertisement insertion may be correctly triggered according to the prompt information.

For example, the CPSF provides the content insertion information of a CoD, and the content meta data of the CoD may describe a program title, a program ID, a brief introduction, and a content classification, and further include advertisement insertion point information. An XML Schema corresponding to this example is described in the following:

```
  <xs:complexType name="CoDProgramInfoType">

  <xs:sequence>

  <xs:element name="CoDContentld" type="xs:anyURI"/>

  <xs:element name="CoDTitle" type="xs:string" minOccurs="0"/>

  <xs:element name="Genre" type="xs:string" minOccurs="0"/>

  <xs:element name="InsertionPoint" minOccurs="0">

  <xs:complexType>

  <xs:sequence>

  <xs:element name="InsertionOffset" type="xs:string" minOccurs="1"/>

  <xs:element name="InertionLength" type="xs:string" minOccurs="0"/>
 
  </xs: sequence>

  </xs:complexType>

  </xs: element>

  </xs: sequence>

  </xs:complexType>
```

The CoDProgramInfoType element is used to describe XML of a single CoD, and the InsertionPoint element is carried in the CoDProgramInfoType element; the InsertionPoint is insertion indicator information in the single CoD, including the InsertionOffset from the CoD and an advertisement InsertionLength.

In practical applications, the XML Schema is not limited to the above format, but the common objective is to enable the content meta data of the CoD to describe the advertisement content insertion information, so that the advertisement insertion may be correctly triggered according to the prompt information.

The matching unit is configured to match the second media content for the UE, so as to obtain a matching result, that is, the second media content capable of being inserted for the same user information. Here, the user information at least includes one of the following information: description information of the first media content currently received by the UE, a user preference, user characteristic information, and UE capability. The matching result at least carries one of the following information: a second media transmission parameter, a second media content source address, a second media content ID, an ID of the first media content, a second media content insertion indicator, and information indicating an association between the user information and the second media content. The second media transmission parameter is used to describe whether the first media transmission parameter or the second media transmission parameter is used as a transmission parameter by using which the second media content is transmitted.

In all the embodiments of the present invention, the association among the first media content and the second media content, and the first media transmission parameter and the second media transmission parameter is not limited, that is, the first media content may be transmitted by using the first media transmission parameter or the second media transmission parameter, and the second media content may also be transmitted by using the first media transmission parameter or the second media transmission parameter. The media transmission parameter includes, but is not limited to, a unicast address plus a port, a multicast address plus a port, an internal module ID, a UE ID, and a user group ID; and the first media transmission parameter and the second media transmission parameter may be the same or different.

In the situation that the matching result carries the second media transmission parameter, the transmission parameter may be generated by the matching unit according to its own logic or after negotiation with the media receiving unit, and may even be provided by other NEs, for example, an IPTV service server or an IPTV service deploying unit. When the media receiving unit and the media content inserting unit belong to different NEs, the transmission parameter is usually identified with an IP address and a port; while when the media receiving unit and the media content inserting unit belong to the same NE, the transmission parameter is usually represented by an internal logic module ID, and both media transmission and signaling interaction between the two are implemented by using internal protocols.

For example, when having a SIP session, the matching unit and the media receiving unit may perform SDP negotiation in a manner of modifying the session, so as to decide a new receiving address and a new receiving port. For instance, the matching unit initiates a session modification request by using a SIP message such as SIP UPDATE or re-INVITE, and negotiates the receiving address and the receiving port corresponding to the second media content by modifying a receiving address of a c row and a media receiving port in an m row, or newly adding m rows and c rows in an SDP message body carried in the message. After receiving an SDP negotiation request, the media receiving unit returns an SDP response. After one or more times of SDP interaction, the matching unit and the media receiving unit reach a common understanding on the new second media transmission parameter, so as to prepare for establishing a transmission channel for the second media content between the inserting unit and the media receiving unit.

The SDP message body of the SIP UPDATE message includes the following content:

```
  ...

  m=video 3458 RTP/AVP 0 96 97 98

  c= IN IP6 5555:1:2:3:4

  a=...

  m=video 0 RTP/AVP 99 100

  c=IN IP6 5555:1:2:3:4

  a=...

  ...
```

The first m row and the first c row represent a transmission port (3458) and a receiving address (5555:1:2:3:4) of the first media content respectively, and the newly added m rows and c rows belong to the new second media transmission parameter (an address plus a port).

The SDP response returned by the media receiving unit includes the following content:

```
  ...

  m=video 3458 RTP/AVP 0 96 97 98
 
  c= IN IP6 5555:1:2:3:4

  a=...

  m=video 3334 RTP/AVP 99 100

  c=IN IP6 5555:1:2:3:4

  a=...

  ...
```

A specific SDP negotiation method is not limited to the present invention, as long as a negotiation result includes the newly generated second media transmission parameter.

Further, the matching result may provide an insertion indicator of the content, which includes, but is not limited to, any combination of the following manners.

A manner of (the second media content ID + time start and end points) is used to indicate that the part of a certain designated time period or a plurality of designated time periods of the second media content, instead of the entire second media content, is sent. For example, the current first media content is CCTV, and from an insertion time 20080420T123432Z, the content from 00:00:30 to 00:10:30 of the second media content being "Hero" is inserted to the first media content, so that the matching result may be described in the form of, for example, ("Hero", 00:00:30, 00:10:30).

A playing speed of the second media content is provided. For example, the content is played in a 2-times fast forward manner, and the matching result is described in the form of adding information similar to (speed=2.0),

Format conversion information of the second media content is provided. For example, the second media content has high definition, and needs to be converted to standard definition, or converted from one encoding/decoding scheme to another.

In practical applications, one or more pieces of second media content may be provided for one piece of first media content, which specifically includes, but is not limited to, the following manners:
1. One second media transmission parameter in the matching result corresponds to one second media content, indicating that the inserting unit sends one second media content to the media receiving unit by using the ID.
2. One second media transmission parameter in the matching result corresponds to a plurality of second media content, indicating that the inserting unit sends a plurality of second media content at the same time or in sequence to the media receiving unit by using the transmission parameter.
3. A plurality of second media transmission parameters in the matching result corresponds to a plurality of second media content, indicating that the inserting unit separately sends the corresponding second media content to the corresponding media receiving units at the same time by using the plurality of second media transmission parameters. This situation may be considered as a special case of the above two, that is, it is required that the different second media content is received at the same time by using the different second media transmission parameters.

In practical applications, the matching unit may be a separate NE or exist in other NEs, for example, a ReCoMmendation Function (RCMF), an ADS, an IPTV SCF, a User Profile Server Function (UPSF), a CPSF, or a UE, which is determined according to practical situations. The matching result may be carried by using the SDP or the XML text.

As an embodiment in which the matching result is carried, when the matching result is carried by using the XML text, the group advertisement insertion in the BC channel may adopt an XML Schema in the following:

```
  <xs:complexType name="BCAdInsertionCommand">
 
  <xs:sequence>

  <xs:element name="BCServiceId" type="xs:anyURI" minOccurs="0"/>

  <xs:element name="AdInsertionBeginTime" type="xs:dateTime" minOccurs="0"/>

  <xs:choice>

  <xs:element name="AdInsertionEndTime" type="xs:dateTime" minOccurs="0"/>

  <xs:element name="AdInsertionLength" type="xs:string" minOccurs="0"/>

  </xs:choice>

  <xs:element name="AdDecision" maxOccurs="6">

  <xs:complexType>

  <xs:attribute name="Groupld" type="xs:string" use="required" default="null">

  <xs:sequence>

  <xs:element name="AdContentId" type="xs:string" minOccurs="0"/>

  <xs:element name="AdContentSourceURL" type="xs:anyURI" minOccurs="0"/>

  <xs:element name="AdContentBandwidth" type="xs:decimal" minOccurs="0"/>

  <xs:element name="Target" minOccurs="0" maxOccurs="6">

  <xs:complexType>

  <xs:sequence>

  <xs:element name="TargetAddr" type="xs:string" minOccurs="0"/>

  <xs:element name="TargetPort" type="xs:decimal" minOccurs="0"/>
 
  </xs:sequence>

  </xs:complexType>

  </xs: element>

  </xs:sequence>

  </xs:complexType>

  </xs: element>

  </xs:sequence>

  </xs:complexType>
```

In the XML Schema of this example, a BCAdInsertionCommand element is described, which includes the currently viewed BCServiceId, AdInsertionBeginTime and AdInsertionEndTime/AdInsertionLength, and AdDecision. The AdDecision includes the selected AdContentId, AdContentSourceURL, AdContentBandwidth, and TargetAddr/TargetPort. The XML Schema in practical applications is not limited to the above format, but the common objective is to enable the advertisement inserting unit to obtain enough information, so as to separately send one or more advertisements to different multicast groups.

As another embodiment in which the matching result is carried, when the matching result is carried by using the XML text, the individualized advertisement insertion in the CoD may be implemented with an XML Schema in the following:

```
  <xs:complexType name="CoDAdInsertionCommand">

  <xs:sequence>

  <xs:element name="CoDContentId" type="xs:anyURI" minOccurs="0"/>
 
  <xs:element name="AdInsertionOffset" type="xs:string" minOccurs="0"/>

  <xs:element name="AdInsertionLength" type="xs:string" minOccurs="0"/>

  <xs:element name="Target" minOccurs="0">

  <xs:complexType>

  <xs:sequence>

  <xs:element name="TargetAddr" type="xs:string" minOccurs="0"/>

  <xs:element name="TargetPort" type="xs:decimal" minOccurs="0"/>

  </xs: sequence>

  </xs:complexType>

  </xs: element>

  <xs:element name="AdDecision" minOccurs="0">

  <xs:complexType>

  <xs:sequence>

  <xs:element name="AdContentId" type="xs:string" minOccurs="0"/>

  <xs:element name="AdContentSourceURL" type="xs:anyURI" minOccurs="0"/>

  <xs:element name="AdContentBandwidth" type="xs:decimal" minOccurs="0"/>

  </xs:sequence>

  </xs: complexType></xs: element>

  </xs:sequence>
 
  </xs:complexType>
```

A CoDAdInsertionCommand element is carried in the text main body, which includes the currently viewed CoDContentId, individualized AdDecision, AdInsertionOffset and AdInsertionLength, and Target. The AdDecision includes the AdContentId, AdContentSourceURL, and AdContentBandwidth. The XML Schema in practical applications is not limited to the above format, but the common objective is to enable the advertisement inserting unit to obtain enough information, so as to separately send one or more advertisements to the target receiving end.

In addition to separately using different XML Schema description manners, the present invention may form XML description of the matching result in a unified manner, that is, both the group advertisement in BC and the individualized advertisement in CoD can be described by instantiating the following XML schema:

```
  <xs:complexType name="AdvPolicys"> //a collection of an advertisement policy, which
 includes zero, one, or more matching results (AdvPolicy)

  <xs:sequence>

  <xs:element name=¡±TargetMedia¡±>

  <xs:complexType>

  <xs:sequence>

  <xs:element name="TargetMediaId" type="xs:anyURI" />

  <xs:element name="TargetMediaType">

  <xs:simpleType>

  <xs:restriction base="xs:string">
 
  <xs:enumeration value="Multicast" />

  <xs:enumeration value="Unicast" />

  </xs: restriction>

  </xs: simpleType>

  </xs: element>

  <xs:choice>

  <xs:sequence>

  <xs:element name="MulticastAddress" type="xs:string" />

  <xs:element name="MulticastSource" type="xs:string" />

  </xs: sequence>

  <xs:sequence>

  <xs:element name="UnicastSource" type="xs:string" />

  <xs:element name="UnicastSourcePort" type="xs:string" />

  <xs:element name="UnicastDestination" type="xs:string" />

  <xs:element name="UnicastDestinationPort" type="xs:string" />

  <xs:element name="Protocol" type="xs:string" />

  </xs: sequence>

  </xs:choice>

  </xs: sequence>
 
  </xs:complexType>
  </xs: element>

  <xs:element name="AdvPolicy" maxOccurs="unbounded">

  <xs:complexType>

  <xs:sequence>

  <xs:element name="AdsId">

  <xs:complexType>

  <xs:sequence>

  <xs:element name="TargetMulticastAddress" type="xs:string"/>

  <xs:element name="AdID" type=¡±xs:string¡± />

  <xs:element name="AdvResources">

  <xs:complexType>

  <xs:sequence>

  <xs: element name="AdvType">

  <xs:simpleType>

  <xs:restriction base="xs:string">

  <xs:enumeration value="Picture" />

  <xs:enumeration value="Video" />

  <xs:enumeration value="Text" />
 
  <xs:enumeration value="Application" />

  </xs:restriction>

  </xs: simpleType>

  </xs: element>

  <xs:element name="AdvLocation" type="xs:anyURI" />

  </xs: sequence>

  </xs:complexType>

  </xs: element>

  <xs:element name="AdStartTimeStamp" type=¡±xs:datetime¡± />

  <xs:element name="AdEndTimeStamp" type=¡±xs:dateTime¡± />

  <xs:element name="InsertMode">

  <xs:simpleType>

  <xs:restriction base="xs:string">

  <xs:enumeration value="InsertAndDelayOrignal" />

  <xs:enumeration value="InsertAndOverlapOrignal" />

  <xs: enumeration value="PartlyOverlap" />

  </xs: restriction>

  </xs: simpleType>

  </xs: element>
 
  </xs:sequence>

  </xs:complexType>

  </xs: element>

  </xs:sequence>

  </xs:complexType>

  </xs: element>

  </xs:sequence>

  </xs:complexType>
```

The TargetMediaId is used to indicate the content ID of the currently viewed program, and the TargetMediaType is used to identify the media type of the currently viewed program, for example, unicast or multicast.

The MulticastAddress and the MulticastSource element are used to describe the media transmission parameters, for example, the multicast address and the multicast source address, when the currently viewed program is in the multicast mode.

The UnicastSource, UnicastSourcePort, UnicastDestination, UnicastDestinationPort, Protocol, and other elements are used to describe the media transmission parameters (the unicast source address/port, the target address/port, and the transmission protocol) when the currently viewed program is in the unicast mode.

The AdvPolicy element is used to describe a matching result, which may carry AdsIds in a plurality of insertion indication time lengths; the AdsId element is used to describe the AdsId required to be played in one insertion indication time length, which includes zero, one, or more playable advertisements. The TargetMulticastAddress element is used to indicate the multicast group to which the AdsId in the current insertion indication time length is set. The AdID element is used to indicate the selectable AdContentId. The AdvResources element is used to describe the advertisement resource information. The AdvType element is used to indicate whether the advertisement resource type description is a picture, a video, a text, or an application. The AdvLocation element is used to indicate the source address of the advertisement resources, for example, FTP URL or SIP URI. The AdStartTimeStamp element is used to indicate the advertisement start time, for example, UTC or NPT. The AdEndTimeStamp element is used to indicate the advertisement end time, for example, UTC or NPT. The InsertMode element is used to indicate whether the advertisement insertion mode is insertion, full overlap, or partial overlap.

The XML Schema does not intend to limit the manner of describing the matching result in the present invention, but gives an exemplary description on the implementation of the manner of describing the matching result. In practical applications, other XML Schema description manners capable of carrying the matching result may also be used.

The media content inserting unit is configured to insert the second media content to the first media content according to the content insertion information and the matching result.

The media content inserting unit is configured to provide the second media content for the media receiving unit in the content insertion time period.

In order to perform the media handover in time, the operations required to be completed by the media content inserting unit include the following:
1. Obtain the content insertion information is obtained, and determine whether the second media content is allowed to be inserted and start and end time points of the content insertion.
2. Obtain the matching result of the second media content ID and the second media transmission parameter.
3. Obtain the second media content indicated by the matching result.
4. Send the second media content indicated by the matching result to the second media transmission parameter when the insertion point arrives; and stop sending the second media content to the second media transmission parameter when the insertion point ends.

Steps 1, 2, and 3 may be completed in real time or in advance. When the steps are completed in real time, the media content inserting unit forwards the obtained second media content to the designated media receiving unit in real time according to the second media transmission parameter by directly applying the matching result; and when the steps are completed in advance, the obtained prompt information, the matching result, and the second media content need to be stored and recorded.

Steps 1, 2, and 3 may be separately completed or completed in one or two steps, for example, the inserting unit firstly obtains the prompt information and the matching result, and then obtains the second media content according to the matching result; or the inserting unit obtains the second media content while obtaining the content insertion information and the matching result at the same time.

In addition to the foregoing steps, the media content inserting unit obtains the first media content, sends the first media content to the media receiving unit by using the first media transmission parameter, before the content insertion time arrives, and stops sending the first media content during the insertion time period; or sends the first media content to the media receiving unit by using the first media transmission parameter at any time.

When the media content inserting unit decides to perform the media content insertion, the matching result provided by the matching unit is divided into the following situations.

Situation I: The second media content is transmitted by using the first media transmission parameter again.

In this case, the media content inserting unit obtains one or more pieces of second media content for the same first media content according to the obtained matching result, and sends the plurality of obtained second media content (if a plurality of second media content exists) to the media receiving unit identified by the first media transmission parameter at the same time, when the insertion time point arrives.

Specifically, in the unicast mode, the first media transmission parameter is usually described with a unicast address and a port, and the inserting unit sends the second media content to the unicast address and the port. When the insertion time point arrives, the media receiving unit receiving the first media content receives the second media content from the same port without establishing a new media connection.

In the multicast mode, the first media transmission parameter may be described with a multicast address (and a port), the inserting unit sends the second media content to the multicast address (and the port), and all the media receiving units receiving the first media content may receive the second media content without joining in the multicast group again.

During the procedure, the first media content may be stopped or not stopped from being transmitted. When the sending of the first media content is stopped, the inserting unit splices the media, that is, executes an operation similar to ON/OFF, so as to change the original transmission of the first media content to the transmission of the second media content, in which the target address and the manner of the transmission are not changed; if the sending of the first media content is not stopped, the media content inserting unit mixes the media, and sends the mixed media to the same address and port, so that the media receiving unit obtains the first media content and the second media content from one media transmission parameter.

Situation II: The second media content is transmitted by using the second media transmission parameter.

In this case, the inserting unit obtains one or more pieces of second media content for one piece of first media content according to the matching result, and when the insertion time point arrives, sends the second media content to the corresponding media receiving unit by using the second media transmission parameter.

A. If the matching result carries the second media transmission parameter, the media content inserting unit sends the second media content to the corresponding media receiving unit by using the second media transmission parameter.

Specifically, in the unicast mode, the matching result carries a second media unicast address and a port, or the same unicast address but with different ports, and the inserting unit sends the obtained one or more pieces of second media content to the unicast address and the port, so that the media receiving unit receiving the first media content needs to receive the second media content from the second media address and the port.

In the multicast mode, the matching result carries the second media multicast address and the port, and the media content inserting unit sends the second media content, so that the media receiving unit receiving the first media content needs to be added with the second media multicast address, for receiving the second media content.

B. If the matching result does not carry the new second media transmission parameter, before the media content inserting unit inserts the content, the second media transmission parameter needs to be generated, and then the second media content is sent by using the second media transmission parameter. The second media transmission parameter may be generated according to its own logic of the inserting unit, or may be obtained from other units, for example, an IPTV service server, an IPTV deploying entity, or an IPTV terminal, or is decided after negotiation with the media receiving unit. When the media receiving unit and the media content inserting unit belong to different NEs, the media transmission parameter is usually identified by an IP address and a port; while when the media receiving unit and the media content inserting unit belong to the same NE, the media transmission parameter is usually represented by an internal logic module ID, and both media transmission and signaling interaction between the two are implemented by using internal protocols.

For example, when having a SIP session, the inserting unit and the media receiving unit may perform SDP negotiation in a manner of modifying the session, so as to decide a new receiving address and a new receiving port. For instance, the inserting unit initiates a session modification request by using a SIP message such as SIP UPDATE or re-INVITE, and negotiates the receiving address and the receiving port corresponding to the second media content by modifying a receiving address of a c row and a media receiving port in an m row, or newly adding m rows and c rows in an SDP message body carried in the message. After receiving an SDP negotiation request, the media receiving unit returns an SDP response. After one or more times of SDP interaction, the inserting unit and the media receiving unit reach a common understanding on the new second media transmission parameter, so as to prepare for establishing a transmission channel for the second media content between the media content inserting unit and the media receiving unit.

The SDP message body of the SIP UPDATE message includes the following content:

```
  ...

  m=video 3458 RTP/AVP 0 96 97 98

  c= IN IP6 5555:1:2:3:4

  a=...

  m=video 0 RTP/AVP 99 100

  c=IN IP6 5555:1:2:3:4

  a=...
 
  ...
```

The first m row and the first c row represent a transmission port (3458) and a receiving address (5555:1:2:3:4) of the first media content, and the newly added m rows and c rows belong to the new second media transmission parameter (an address plus a port).

The SDP response returned by the media receiving unit includes the following content:

```
  ...

  m=video 3458 RTP/AVP 0 96 97 98

  c= IN IP6 5555:1:2:3:4

  a=...

  m=video 3334 RTP/AVP 99 100

  c=IN IP6 5555:1:2:3:4

  a=...
```

A specific SDP negotiation method is not limited to the present invention, as long as a negotiation result includes the newly generated second media transmission parameter.

For Situation II, when sending the second media content in the insertion time period, the media content inserting unit may correspondingly process the first media content. The processing includes, but is not limited to, the following:
Processing 1: The first media content is still sent by using the first media transmission parameter, and the media receiving unit receiving the first media content may receive the first media content and the second media content at the same time by using two transmission parameters (the unicast receiving port or the multicast address).
Processing 2: The sending of the first media content by using the first media transmission parameter is stopped, but the first media content and the second media content are together transmitted by using the new transmission parameter. In this case, the media receiving unit receiving the first media content receives the first media content and the second media content by using the new transmission parameter at the same time, and the inserting unit mixes the media.
Processing 3: The first media content is not sent by using the first media transmission parameter or the second media transmission parameter, but processed in other ways, for example, is discarded or cached, and thus, the media receiving unit receiving the first media content only receives the second media content by using the new transmission parameter, and the media content inserting unit splices the media.

It may be known that substantially, the media content inserting unit sends the second media content to the designated media receiving unit in the insertion time period through the existing transmission channel or by newly establishing the transmission channel. In the insertion time period, the media receiving unit may only receive the second media content, or receive the second media content and the first media content at the same time, in which the transmission channel is the media transmission parameter.

In practical applications, the media content inserting unit may be a separate NE or exist in other NEs, for example, an IPTV UE, an IPTV MF, an AD Splicer, an ADS, a Content Delivery Network (CDN), an iTV AS, an EAS server, or other NEs capable of providing the content insertion function. Taking the IPTV MF as an example, during the procedure of playing the CoD, the IPTV MF receives a SIP MESSAGE from the IPTV SCF, and carries an advertisement insertion indicator, for example, at the 15^{th} minute of the current program, a video advertisement "BMW" needs to be played; the IPTV MF may perform media negotiation with the IPTV terminal by way of session modification, for example, initiating SIP re-INVITE, and obtaining the IP address, the port, and the AdContentBandwidth required by the video advertisement "BMW" by way of SDP interaction; after successfully negotiating the transmission parameter, the IPTV MF pauses sending the current CoD media, obtains the media of the video advertisement "BMW", and sends the media to the IPTV terminal by using the negotiated IP address and port; and after the advertisement is completely played, the IPTV MF recovers sending the media of the current CoD. In this example, the IPTV MF is the content inserting unit, the IPTV SCF is the matching unit, the IPTV terminal is the media receiving unit, the current CoD is the first media content, and the advertisement "BMW" is the second media content.

The media receiving unit is configured to receive the first media content having the inserted second media content. During the content insertion procedure, the media receiving unit is configured to receive the second media content sent by the media content inserting unit, and when the content insertion is not performed, the media receiving unit is configured to receive the first media content.

After receiving the second media content or the first media content, the media receiving unit performs the corresponding process after being driven by its own logic or controlled by other control units, for example, separately presents the second media content to a display device, so as to display the second media content and the first media content together, or even decodes the received content. In addition, the media receiving unit may also perform signaling plane interaction with the media content inserting unit, for example, the media receiving unit requests the media content inserting unit to insert the content; for example, the media receiving unit performs media negotiation with the media content inserting unit, so as to establish the media transmission channel of the second media content. The signaling interaction protocols on the interface include, but are not limited to, Internet Group Management Protocol (IGMP), Multicast Listener Discovery (MLD), SIP, Real Time Streaming Protocol (RTSP), HTTP, FTP, and SOAP internal protocol.

In practical applications, the media receiving unit may be a separate NE, or exist in an IPTV UE, a Set Top Box (STB), an attached device, for example, a new-type remote control, a Personal Digital Assistant (PDA) connected to the STB, or other devices.

FIG. 6 shows the media content inserting unit of the system for inserting the media content in the IPTV in FIG. 5 according to the embodiment of the present invention. The unit further includes a content insertion information obtaining module, a matching result obtaining module, a media content obtaining module, a media content sending module, and a media storing module.

The content insertion information obtaining module is configured to obtain the content insertion information.

The matching result obtaining module is configured to obtain the matching result. The module may obtain the matching result after receiving the content insertion information, and may also independently complete the operation of obtaining the matching result.

The media content obtaining module is configured to obtain the media content according to the matching result and the content insertion information.

The media content sending module is configured to send the media content obtained by the media content obtaining module to the media receiving unit by using the media transmission parameter.

The media storing module is configured to store the second media content.

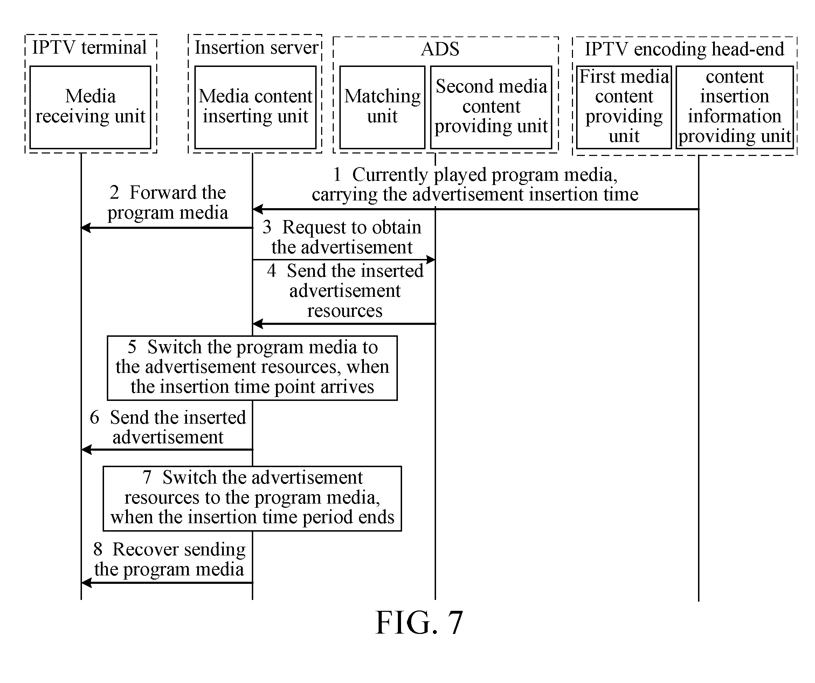

Referring to FIG. 7, in an embodiment, the present invention provides a method for inserting media content in an IPTV. The process of the method is described in the following.

In this embodiment, an IPTV encoding head-end encapsulates the second media content, that is, the advertisement insertion time and other information, together with the currently played program media, that is, the first media content, to the media transmission channel, that is, the media transmission parameter, for sending; the ADS provides the matching result of the user and the advertisement, and the corresponding advertisement resources; the IPTV terminal receives the currently played program media and the inserted advertisement resources; and the insertion server completes inserting the advertisement, that is, sends the normal program to the IPTV terminal before the insertion time arrives, and sends the advertisement content in the insertion time period. The IPTV terminal includes a media receiving unit; the insertion server includes a media content inserting unit; the ADS includes a matching unit and a second media content providing unit; and the IPTV encoding head-end includes a first media content providing unit and a content insertion information providing unit.

The process of the method includes the following steps:
1. The IPTV encoding head-end sends the advertisement insertion time information and the BC media to the insertion server in an MPEG-TS encapsulation manner. In this step, the IPTV encoding head-end is preferred, and in practical applications, the IPTV MF, the CDN, or other NEs implement the action. For example, when the MF mixes and encapsulates some additional information in the media stream, the advertisement insertion time point may be bound with a normal direct dialing program stream as the additional information, and then sent to an AD Splicer.
2. When having no advertisement insertion task, the insertion server sends the normal BC program to the IPTV terminal, to realize viewing of the normal program; meanwhile, the insertion server needs to monitor the obtained normal BC media, and when finding the carried advertisement insertion time and other information carried therein, the insertion server extracts the information, for being cached or immediately initiating the content insertion.
3. The insertion server obtains the advertisement insertion time information from the media, and obtains proper advertisement resources from the ADS according to its own logic or control information of other NEs. The ADS generates the matching result by using the matching function thereof, or obtains the matching result of the user and the advertisement from other NEs, and positions and prepares the advertisement resources accordingly.
4. After obtaining the request, the ADS sends the advertisement resources to the insertion server. In this step, the ADS may send the advertisement resources to the insertion server by TCP, UDP, RTP, or MPEG-TS streams, or in other encapsulation manners. The insertion server instantly inserts or caches the received advertisement resources according to its own logic or control information of other NEs, for immediately inserting the advertisement when the insertion time arrives.
5. When the insertion time point arrives, the insertion server replaces the BC media being sent with the instantly obtained or pre-cached advertisement resources, and sends the advertisement media. In this procedure, an encapsulation format of the advertisement resources may be the same as that of the first media content, or may be other encapsulation formats. The advertisement resources may also be sent in the same manner as that of the first media content, in which the original unicast or multicast address and port are used, or may be sent in a transmission manner different from that of the first media content, for example, the advertisement resources are sent to another address by using the newly assigned multicast address.
6. Based on the result of step 5, the insertion server sends the inserted advertisement resources to the IPTV terminal in which the media receiving unit exists. When the insertion server sends the advertisement resources to the original normal BC address, the IPTV terminal completes the advertisement insertion without sensing the content conversion; and when the insertion server uses the new propagation address and port, that is, the second media transmission parameter, the IPTV terminal needs to sense the change of the propagation manner, for example, obtains the multicast address from the network, so as to join in the new multicast group. In the procedure, the insertion server continues receiving the normal BC program, but does not send the BC program, and instead, may discard or cache the BC program.
7. The insertion time period ends, and the insertion server sends the received normal BC program instead of the advertisement resources in the original encapsulation format and propagation manner. The original encapsulation format and propagation manner refer to the format and manner in which the normal BC program is encapsulated and propagated before the insertion time period arrives, and herein the normal BC program is delivered in the encapsulation format and the propagation manner.
8. Based on the execution result of step 7, the IPTV terminal recovers obtaining the normal BC media, and ends the advertisement insertion.

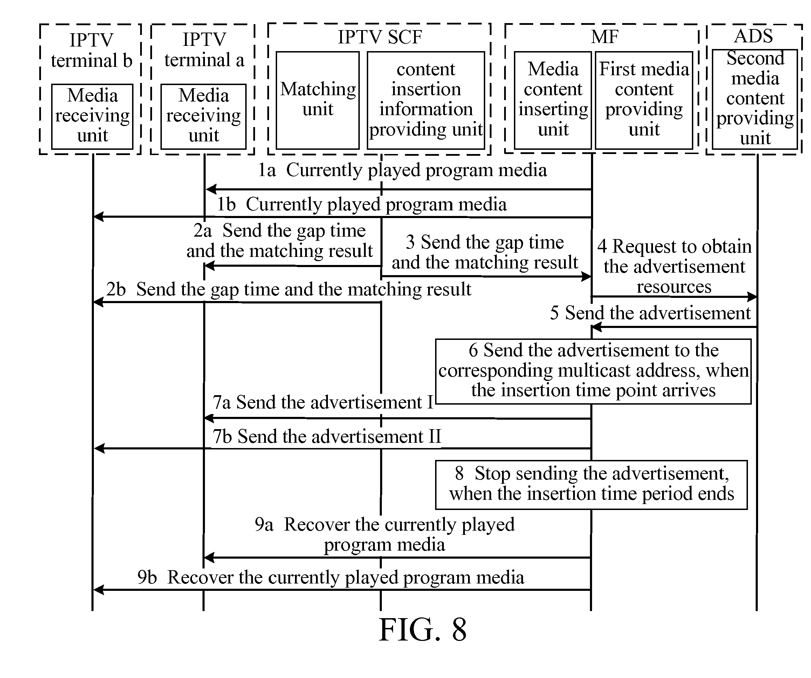

Referring to FIG. 8, in an embodiment, the present invention provides another method for inserting media content in an IPTV. The process of the method is described in the following.

In this embodiment, the group advertisement insertion in the BC program is implemented according to the matching result between the user group and the advertisement. When the BC program is played to a certain time, the advertisement may be inserted, but different advertisements are pushed for users of different characteristics. For example, a certain BC channel has three advertisements A, B, and C to be inserted, and the advertisements need to be pushed to different user groups including teenagers, adults, and seniors. The result of the application of this embodiment is that among all the viewers of the same channel, in the same time period, all the teenagers view the inserted advertisement A, all the adults view the inserted advertisement B, and all the seniors view the inserted advertisement C. The IPTV terminal includes a media receiving unit; the IPTV SCF includes a matching unit and a content insertion information providing unit; the MF includes a media content inserting unit and a first media content providing unit; and the ADS includes a second media content providing unit.

The process of the method includes the following steps:

In this embodiment, the IPTV SCF provides the content insertion information and the matching relation between the user information and the second media content, that is, the matching result of the advertisement, and sends them to the MF; the MF provides the normally played program media, and completes inserting the advertisement in the content insertion time period; and the ADS provides the inserted advertisement resources.

The specific process is explained in the following:
1a, 1b. When different IPTV terminals view the same IPTV program, the MF sends the program media to the terminals. The currently played program media may be forwarded through or not through the media content inserting unit, and directly sent to the IPTV terminals. In this solution, the program media is sent to a multicast access point in a multicast mode, and is received by each IPTV terminal in a manner of joining in the multicast group. In practical applications, the program media may also be transmitted in a unicast mode, which is determined according to actual demands. The media encapsulation manner includes MPEG-TS, RTP, UDP, TCP, and other manners.
2a, 2b. The IPTV SCF generates the matching relation between the user information and the second media content, that is, the matching result of the advertisement, according to the meta data of the currently played program, the meta data of the advertisement to be inserted, user characteristics, and other data, and sends the matching relation to the terminals viewing the current program. Meanwhile, the IPTV SCF provides the advertisement insertion time (that is, gap time) of the current program. In this manner, users of different types may find the corresponding multicast addresses according to the obtained matching result. Here, the multicast address corresponding to each advertisement is assigned by the IPTV SCF according to its own logic, or provided by a daemon service deploying entity.

In this step, the channel through which the IPTV SCF delivers the information to the IPTV terminal may be notified with a SIP message, for example, SIP INFO, SIP MESSAGE, or SIP NOTIFY, through an IMS Core; or may be notified in a separate information notification manner, for example, HTTP, SOAP, or other manners, without using the IMS Core; or may even be sent to the MF, and then forwarded to the IPTV terminal after being mixed with a normal program by the MF; further, the delivered information may be delivered to the IPTV terminal after being encapsulated in a script program in the form of an XML text, and the commands in the program are executed by the IPTV terminal.
3. The IPTV SCF sends the matching result and the advertisement insertion time to the MF, to indicate the MF to perform advertisement insertion. In the IPTV network based on the IMS, the IPTV SCF may send the matching result and the advertisement insertion time information to the MF by using a SIP message through the IMS Core; and the IPTV SCF may send the information to the MF by using HTTP, SOAP, or other protocols through a separate TCP connection without the IMS Core. Further, the IPTV SCF sends the information to the MF by encapsulating the information in the script program text. Here, the script program may be a text described in the XML manner. After obtaining the script program, the MF executes the commands in the script program, for example, immediately executes content insertion, or executes content insertion after a period of time. For example, the matching result passes through the IMS Core, the IPTV SCF initiates a SIP MESSAGE to the MF, in which the advertisement, multicast address, and playing time may be carried in the XML text as follows:

```
  <BCAdInsertionCommand>

  <BCServiceId> CCTV01@cmcc.com </BCServiceId>

  <AdInsertionBeginTime>2009-01-01T 12:00:00.000Z</AdInsertionBeginTime>

  <AdInsertionEndTime>2009-01-01T 12:15:00.000Z</AdInsertionEndTime>

  <AdDecision GroupId="group001" >
 
       <AdContentId>AD_AUDI_A8@cmcc.com </AdContentId>

       <AdContentSourceURL> ftp://ad.cmcc.com/ad_audi_a8.avi
 </AdContentSourceURL>

       <AdContentBandwidth>5760</AdContentBandwidth>

       <Target>

            <TargetAddr>211.211.1.123</TargetAddr>

            <TargetPort>5760</TargetPort>

       </Target>

  </AdDecision>

  <AdDecision GroupId="group002">

       <AdContentId>AD_NOKIA_N95@cmcc.com </AdContentId>

       <AdContentSourceURL> ftp://ad.cmcc.com/ad_nokia_n95.avi
 </AdContentSourceURL>

       <AdContentBandwidth>5760</AdContentBandwidth>

       <Target">

            <TargetAddr>211.211.1.135</TargetAddr>

            <TargetPort>3456</TargetPort>

       </Target>

  </AdDecision>
 
  <AdDecision GroupId="group003">

       <AdContentId>AD_IBM_T60@cmcc.com </AdContentId>

       <AdContentSourceURL> ftp://ad.cmcc.com/ad_ibm_t60.ts
 </AdContentSourceURL>

       <AdContentBandwidth>4880</AdContentBandwidth>

       <Target>

            <TargetAddr>211.211.1.144</TargetAddr>

            <TargetPort>4430</TargetPort>

       </Target

  </AdDecision>

  </BCAdInsertionCommand>
```

In this example, the message body of the SIP MESSAGE includes a BCAdInsertionCommand element, in which the carried current BCServiceId is CCTV01@CMCC.com, the corresponding advertisement start time and end time are that (the AdInsertionBeginTime is 12:00:00, January 1, 2009, the AdInsertionEndTime is 12:15:00, January 1, 2009, and the time length is 15 minutes), and three AdDecisions are provided for three different groups. The AdDecision includes different AdContentIds, AdContentSourceURLs, AdContentBandwidths, and TargetAdds and TargetPorts corresponding to different groups.

The message body of the SIP MESSAGE of this example may also be encapsulated by using the XML text described in the following:

```
  <AdvPolicys>
 
  <TargetMedia>

  <TargetMediaId>CCTV01@cmcc.com </TargetMediaId>

  <TargetMediaType>Multicast</TargetMediaType>

  <MulticastAddress>211.211.1.121:12344</MulticastAddress>

  </TargetMedia>

  <AdvPolicy>

  <AdsId>

  <TargetMulticastAddress>211.211.1.123:5760</TargetMulticastAddress>

  <AdID>ad_video_audi_a8</AdID>

  <AdvResources>

  <AdvType>Video</AdvType>

  <AdvLocation>ftp://ad.cmcc.com:5760/ad_audi_a8.avi</AdvLocation>

  </AdvResources>

  <AdStartTimeStamp>2009-01-01T12:00:00.000Z</AdEndTimeStamp>

  <AdEndTimeStamp>2009-01-01T12:15:00.000Z</AdEndTimeStamp>

  <InsertMode>InsertAndOverlapOrignal</InsertMode>

  </AdsId>

  <AdsId>

  <TargetMulticastAddress>211.211.1.135:3456</TargetMulticastAddress>
 
  <AdID> ad_video_nokia_n95</AdID>

  <AdvResources>

  <AdvType>Video</AdvType>

  <AdvLocation> ftp://ad.cmcc.com:5760/ad_nokia_n95.avi</AdvLocation>

  </AdvResources>

  <AdStartTimeStamp>2009-01-01T12:00:00.000Z</AdEndTimeStamp>

  <AdEndTimeStamp>2009-01-01T12:15:00.000Z</AdEndTimeStamp>

  <InsertMode>InsertAndOverlapOrignal</InsertMode>

  </AdsId>

  <AdsId>

  <TargetMulticastAddress>211.211.1.144:4430</TargetMulticastAddress>

  <AdID> ad_video_ibm_t60</AdID>

  <AdvResources>

  <AdvType>Video</AdvType>

  <AdvLocation> ftp://ad.cmcc.com:5760/ad_ibm_t60.ts </AdvLocation>

  </AdvResources>

  <AdStartTimeStamp>2009-01-01T12:10:00.000Z</AdEndTimeStamp>

  <AdEndTimeStamp>2009-01-01T12:15:00.000Z</AdEndTimeStamp>

  <InsertMode>InsertAndOverlapOrignal</InsertMode>
 
  </AdsId>

  </AdvPolicy>

  </AdvPolicys>
```

In practical applications, the XML text is not limited to the above format, but the common objective is to enable the advertisement inserting unit to obtain enough information, so as to separately send one or more advertisements to different multicast groups.
4. After obtaining the AdContentIds corresponding to the different user groups and the insertion time information of each advertisement, the MF requests the advertisement resources from the ADS.
5. The ADS delivers the advertisement resources to the MF. The delivered advertisement resources may use MPEG-TS, RTP, UDP, TCP, and other transmission protocols.
6. When the insertion point arrives, the MG sends the different advertisement resources to each user group. In the procedure, the MF separately sends the obtained advertisement resources to the corresponding multicast address according to the obtained matching result. Here, the sending of the normal program media may be or may not be stopped.
7a, 7b. Based on an execution result of step 6, the MF sends the advertisement resources to each IPTV terminal requiring the second media content by using the multicast access point in the multicast mode. The encapsulation format may be MPEG-TS, RTP, UDP, or TCP. Due to different obtained matching results, a terminal a and a terminal b join in different multicast groups at the same time, and receive different advertisements, for example, the UE of the terminal a is male, and an shaver advertisement (the second media content I) is played; and the UE of the terminal b is female, and a cosmetic advertisement (the second media content II) is played. In the procedure, each IPTV terminal may select to exit the multicast group of the normally played program media, or select to receive both the program media and the advertisement resources instead of exiting the multicast group.
8. When the advertisement insertion point ends, the MF stops sending all the advertisement resources. If in the insertion time period, the MF does not stop sending the interrupted program media, the MF only needs to stop sending the advertisement resources; otherwise, the MF needs to re-send the interrupted program media to the original multicast address.
9a, 9b. Based on an execution result of step 8, the MF sends the interrupted program media to the original multicast address, the IPTV terminal of each advertisement multicast group exits the corresponding multicast group, and receives the program media from the original multicast group. If the first media content is not interrupted in the insertion time period, the IPTV terminal only exits the multicast group of the advertisement resources; and if in the insertion time period, the MF stops sending the normal program media, in addition to exiting the multicast group of the advertisement resources, the IPTV also needs to re-join in the original program media multicast group.

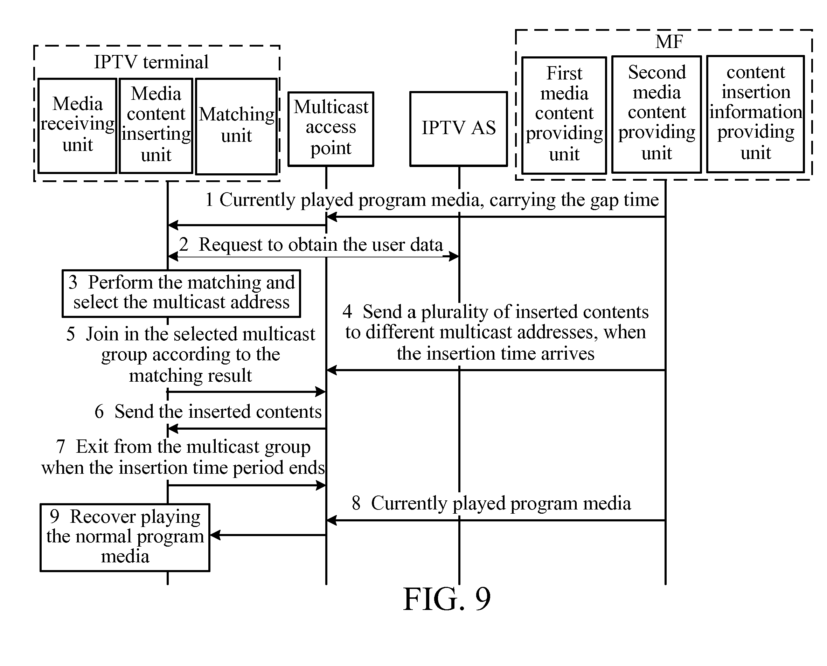

Referring to FIG. 9, in an embodiment, the present invention provides another method for inserting media content in an IPTV.

This embodiment presents a method for implementing group content insertion. In this embodiment, an IPTV terminal, including a media receiving unit, a media content inserting unit, and a matching unit, implements matching, inserting, and receiving functions of the second media content; and an MF includes a first media content providing unit, a second media content providing unit, and a content insertion information providing unit. The IPTV terminal obtains the insertion resources and the program media at the same time, and performs content insertion when the insertion time point arrives, so that the inserted content is presented in the insertion time period. In this embodiment, the insertion resources are the IPTV content selected according to the user preference, for example, film trailers and games, and definitely may also be the inserted advertisement selected according to the user characteristics or preference. A plurality of content may be inserted, and is separately sent by the MF to a plurality of multicast addresses according to a deployment result when the insertion time arrives. Before the above process, the MF sends the insertion time (gap time), description information of the plurality of content to be inserted, and the currently played program media to the plurality of IPTV terminals in the multicast mode, and the IPTV terminal selects the second media content suitable for the current UE after performing the matching according to the obtained UE data, finds the corresponding multicast address, joins in the corresponding multicast group when the insertion point arrives, and implements the content insertion, so that the IPTV terminal may obtain the inserted resources in the insertion time period.

The method includes the following steps:
1. The MF sends the content insertion time information and the currently played program to the IPTV terminal viewing the program by using the multicast access point. In this embodiment, the media is delivered in the multicast mode.
2. After obtaining the advertisement insertion time information, the IPTV terminal requests to obtain the UE data from the AS, for example, the user preference data or the characteristics of the UE, as described in the overall solution. In particular situations, this step may be omitted. For example, the UE data is saved in the terminal, and the IPTV terminal may locally obtain the UE data without obtaining the UE data from the AS; further, the information according to which the IPTV terminal performs the matching is not the UE data, but the IPTV terminal obtains the UE data according to its own characteristics or other interaction manners, for example, the IP address of the UE.
3. The IPTV terminal matches the second media content, to select the proper matching result and find the corresponding multicast address, so as to insert the content when the insertion time point arrives. Before this step, the IPTV terminal obtains the description information of the second media content according to its own configuration or from other NEs, for example, from the SSF, or obtains the information together with the media stream from the MF. The description information of the second media content includes the meta data of one or more pieces of second media content to be inserted, and the corresponding multicast address. Here, the matching unit, the inserting unit, and the media receiving unit all exist in the IPTV terminal, and the signaling interaction and media transmission there-between are both implemented by using internal protocols.
4. When the insertion point arrives, the MF separately sends the plurality of second media content, that is, the insertion resources, to the corresponding multicast addresses.
5, 6. The two steps are synchronous with step 4. When the insertion point arrives, the IPTV terminal joins in the corresponding multicast group according to the obtained matching result, so as to obtain the corresponding second media content. Here, an I1 interface between the media receiving unit and the media content inserting unit may be implemented by using the internal protocol. From steps 1 to 6, the IPTV terminal may not stop receiving the normally played program media, but needs to obtain and present the inserted resources in the insertion time period, for example, the inserted advertisements and the inserted film trailers.
7. The insertion time period ends, and the IPTV terminal exits the advertisement multicast group.
8. The insertion time period ends. The media sent by the MF does not have the insertion resources, and becomes the normally played program media.
9. Meanwhile, the IPTV terminal stops inserting the insertion resources, and recovers playing the normal BC program.

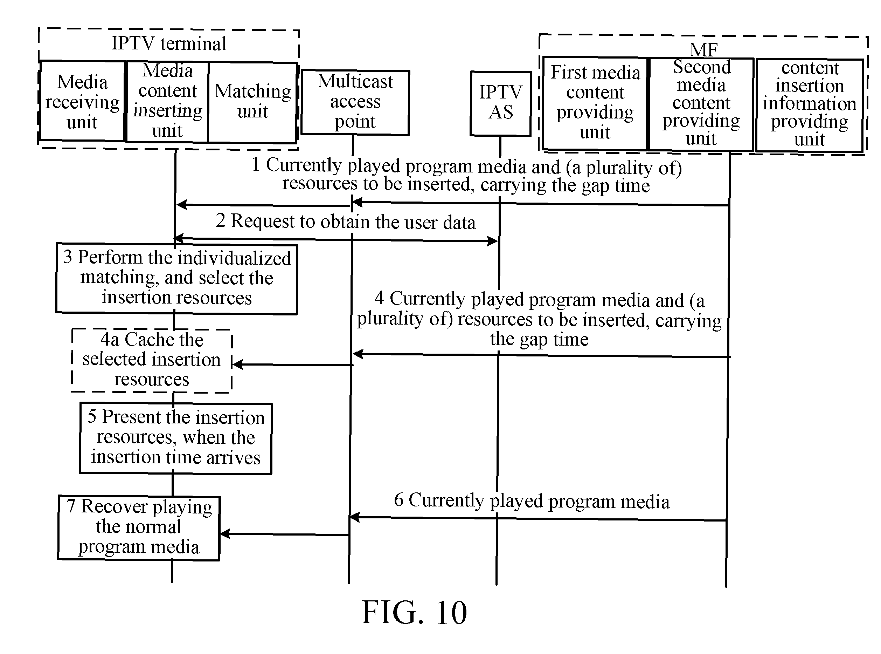

Referring to FIG. 10, in an embodiment, the present invention provides another method for inserting media content in an IPTV.

This embodiment presents another method for implementing the group content insertion. In this embodiment, the plurality of insertion resources to be selected and the normally played BC program are together sent to the same multicast address, and the IPTV terminal performs the matching according to individualized requirements of the UE, and selects the proper resources from the plurality of obtained insertion resources, thereby implementing the content insertion. Here, the insertion resources may be advertisements, interactive content, film trailers, and other IPTV content.

During the procedure, the IPTV terminal receives the first media content and the second media content at the same time without exiting the current multicast group, selects one or more pieces of content from the plurality of second media content, and presents the content on a display device. The IPTV terminal includes a media receiving unit, a media content inserting unit, and a matching unit; and the MF includes a first media content providing unit, a second media content providing unit, and a content insertion information providing unit.

The method includes the following steps:
1. The MF sends the insertion time information (that is, the gap time) of the insertion resources and the currently played program together to the multicast access point, and the IPTV terminal joins in the multicast group for receiving the information and the program.
2. After obtaining the advertisement insertion time information, the IPTV terminal requests to obtain the UE data from the AS, for example, the user preference data or the characteristics of the UE, as described in the overall solution. In particular situations, this step may be omitted. For example, the UE data is saved in the terminal, and the IPTV terminal may locally obtain the UE data without obtaining the UE data from the AS; further, the information according to which the IPTV terminal performs the matching is not the UE data, but the IPTV terminal obtains the UE data according to its own characteristics or other interaction manners, for example, the IP address of the UE.
3. The IPTV terminal matches the insertion resources, to select the proper matching result for insertion when necessary. Before this step, the IPTV terminal obtains the description information of the second media content according to its own configuration or from other NEs, for example, from the SSF, or obtains the information together with the media stream from the MF. The description information of the second media content includes the meta data of one or more pieces of second media content to be inserted. Here, the matching unit, the inserting unit, and the media receiving unit all exist in the IPTV terminal, and the signaling interaction and media transmission there-between are implemented by using internal protocols.
4. When the insertion point arrives, the MF separately sends the plurality of second media content, that is, the insertion resources, together with the currently played BC media to the multicast address of the BC program. Here, the MF mixes the second media content and the first media content, and transmits the content by using the first media transmission parameter (the multicast address).
4a. Before the insertion point arrives, the IPTV terminal selectively caches the plurality of obtained resources, that is, only caches the resources satisfying the matching result. The procedure is optional, that is, if the insertion time requires real-time insertion, the IPTV terminal directly sends the obtained insertion resources satisfying the matching result to the display device or performs other processes instead of caching.
5. When the insertion point arrives, the IPTV terminal presents the insertion resources. From steps 1 to 5, the IPTV terminal stops presenting the normally played BC program, and the IPTV terminal splices the media; or the IPTV terminal does not stop presenting the normally played program media, but needs to obtain and present the inserted resources in the insertion time period, for example, the inserted advertisements and the inserted film trailers.
6. The insertion time period ends. The media sent by the MF does not have the insertion resources, and becomes the normally played program media.
7. Meanwhile, the IPTV terminal stops inserting the insertion resources, and recovers playing the normal BC program.

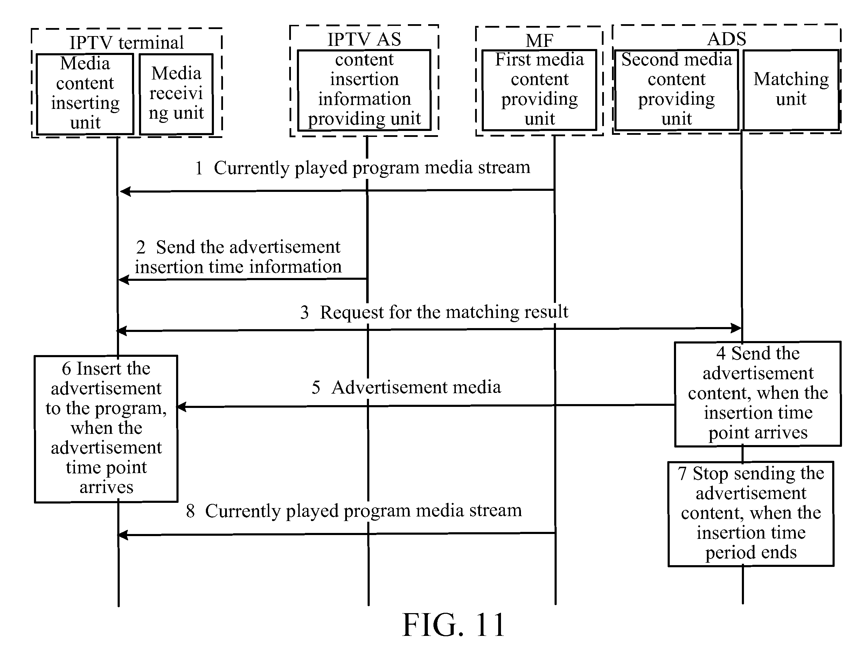

Referring to FIG. 11, in an embodiment, the present invention provides another method for inserting media content in an IPTV.

This embodiment presents another method for implementing the group advertisement insertion. After obtaining the advertisement insertion time point in the current program, the IPTV AS carries the current program ID and the advertisement insertion time point, and triggers the service to the ADS to implement the group advertisement insertion. The ADS matches the advertisement after individualized setting of the UE, generates the matching result, establishes the plurality of multicast groups, and separately sends each advertisement media to the corresponding multicast address.

After obtaining the advertisement insertion point of the current program and the advertisement request link (that is, the ADS address), the IPTV terminal requests insertion from the ADS. The ADS finds the corresponding advertisement and the multicast address according to the individualized setting of the requesting UE, and returns the corresponding advertisement and the multicast address to the UE. The UE joins in the corresponding multicast group.

After the advertisement ends, the IPTV terminal exits the corresponding (advertisement) multicast group, and recovers viewing the normal program view. The IPTV terminal includes a media content inserting unit and a media receiving unit; the IPTV AS includes a content insertion information providing unit; the MF includes a first media content providing unit; and the ADS includes a second media content providing unit and a matching unit.

The method includes the following steps:
1. The IPTV terminal joins in the IPTV program media multicast group, and views the program. Here, the program media is sent to the multicast access point by the MF in a multicast mode, and the IPTV terminal joins in the corresponding multicast group by using IGMP, MLD, or other protocols, for receiving the media stream.
2. The advertisement insertion time is approaching, and the IPTV AS delivers the advertisement insertion time information to each IPTV terminal, and delivers the ADS address at the same time.
3. The IPTV terminal requests the matching result from the ADS by using the obtained ADS address, and the ADS generates the UE transmission parameter and the matching result of the AdContentId according to the UE data, the advertisement deployment, and other information, and returns the UE transmission parameter and the matching result of the AdContentId to the IPTV terminal. Here, the request and the response may be transmitted by using SIP, HTTP, SOAP, RTSP, or an internal protocol. In the matching result, one normally played program media may correspond to one or more multicast addresses, and each multicast address may correspond to one or more advertisements. When one multicast address in the matching result corresponds to a plurality of advertisements, the ADS needs to send a plurality of advertisements at the same time in one media transmission parameter, and the IPTV terminal may select one, a plurality of, or all of the advertisements.
4. When the advertisement insertion point arrives, the ADS sends the corresponding advertisement to the multicast address.
5. Based on an execution result of step 4, the advertisement media is sent to the multicast access point in the multicast mode, and the IPTV terminal joins in the multicast group, so as to obtain the advertisement content.
6. When the advertisement insertion point arrives, the IPTV terminal of each group replaces the normally played program media with the obtained advertisement, so as to present the advertisement content.
7. When the advertisement insertion time period ends, the ADS stops sending the corresponding advertisement to each multicast address.
8. This step is synchronous with step 7. The IPTV terminal exits the corresponding advertisement multicast group, and continues receiving and presenting the interrupted program media. During the procedure from steps 1 to 8, the IPTV terminal continues receiving the program media, but does not present the media after obtaining the same, or presents the media together with the advertisement. Definitely, during the advertisement insertion procedure, the IPTV terminal may stop receiving the program media, and only obtains the advertisement content without the program media.

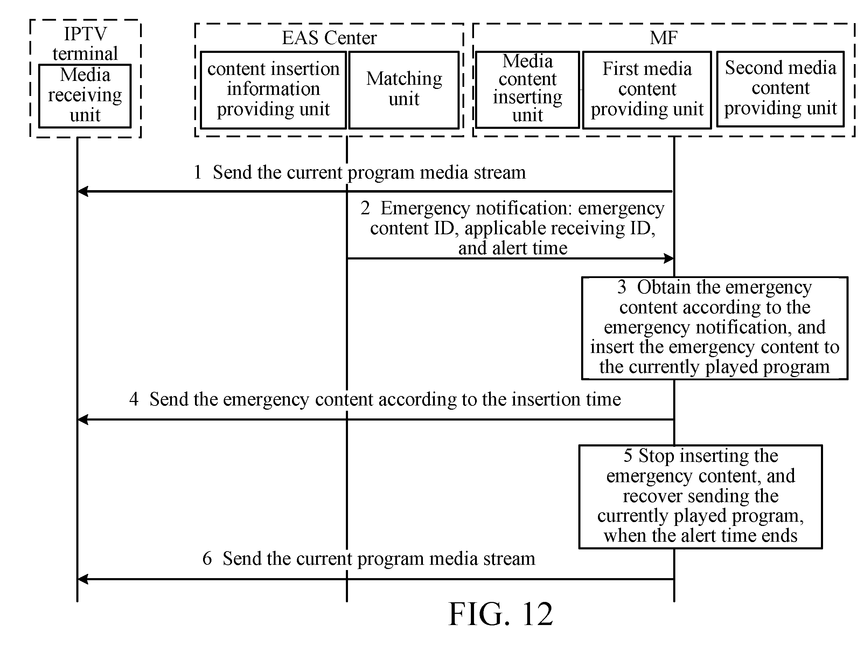

Referring to FIG. 12, in an embodiment, the present invention further provides a method for inserting media content in an IPTV.

In this embodiment, the emergency service notification and the media forced handover are performed by using the content insertion method. When an emergency service notification is received, the network needs to send a particular second media content, for example, a video notification played by the emergency channel, to all the users within the emergency service range. For example, if volcanic explosion will happen in a certain place, all the IPTV services of the place need to be paused, and on-site reports, emergency evacuation indications, and other content related to the volcanic explosion are forcedly inserted. In this case, the EAS Center includes a content insertion information providing unit and an emergency service matching unit; the MF includes a media content inserting unit, a first media content providing unit, and a second media content providing unit; and the IPTV terminal includes a media receiving unit.

The method includes the following steps:
1. The IPTV terminal uses the IPTV service, and the MF sends the program media. The program media may be sent in a unicast or multicast mode according to service demands, and the encapsulation format may be MPEG-TS, RTP, UDP, or TCP.
2. The EAS Center sends an emergency notification to the MF, for notifying of the content insertion. Here, the emergency notification carries the matching result, for example, all the users in a certain area need to receive a certain emergency content and the content insertion time point, for example, "now" represents that the emergency content is immediately inserted.
3. The MF obtains the emergency content according to the content of the emergency notification, interrupts all the program media streams being sent, inserts the obtained emergency content, and sends the emergency content to the same transmission parameter. For example, for all the users in a certain area, no matter the unicast or multicast, the data transmission, or the interaction mode is adopted, the same content needs to be inserted at the same moment. In the unicast or multicast mode, the MF sends the emergency content by using the transmission channel of the program media stream (for example, the unicast receiving address plus the port, and the multicast address).
4. Based on an execution result of step 3, the MF sends the emergency content to all the IPTV terminals to which the emergency notification is applicable for presenting the energy content. Here, the normally played program media on the IPTV terminal is replaced with the emergency content.
5. The alert time passes, and the MF stops inserting the emergency content, and sends the interrupted program media by using the original transmission channel. During the entire procedure, the MF and each IPTV terminal send the media by using the transmission parameter applicable to the normal program media stream, without generating the new media transmission parameter by way of negotiation.
6. Based on an execution result of step 5, the MF sends the interrupted program media to the corresponding IPTV terminal, and the media on all the IPTV terminals to which the emergency notification is applicable are normally played.

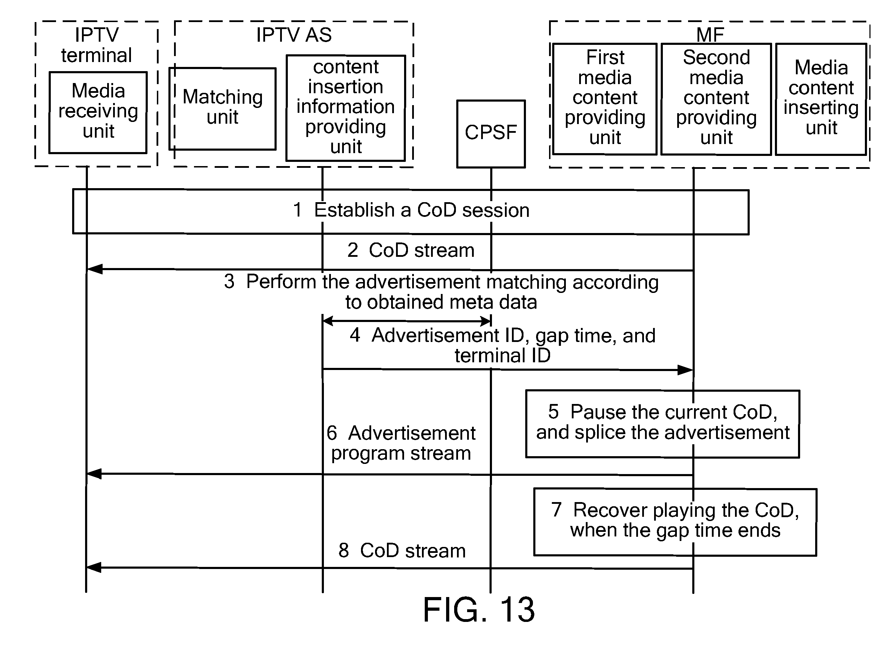

Referring to FIG. 13, in an embodiment, the present invention provides another method for inserting media content in an IPTV.

In this embodiment, the individualized advertisement insertion in the CoD is implemented in a content insertion manner. After obtaining the advertisement insertion time of the current CoD, the IPTV AS matches and filters one or more advertisements to be inserted according to obtained individualized setting of the UE, and notifies the MF of the matching result (the advertisement media address, the advertisement insertion time, and the UE IP). Before or when the gap time arrives, the MF obtains the advertisement media stream, and when the gap time arrives, the MF pauses playing the current program, and splices the advertisement media stream and the normal CoD content, in which the sending address and port remain unchanged. When the gap time ends, the MF finishes splicing, and recovers the CoD media stream. Here, the advertisement media stream is the second media content, and the normal CoD content is the first media content. The IPTV terminal includes a media receiving unit; the IPTV AS includes a matching unit and a prompt information providing unit; and the MF includes a first media content providing unit, a second media content providing unit, and a media content inserting unit.

The method includes the following steps:
1. The IPTV terminal establishes a CoD session with the MF. The CoD session may be a SIP session established between the IPTV terminal, the IPTV AS, and the MF, for example, SIP INVITE, or may be an RTSP session established between the IPTV terminal and the MF, for example, SETUP, or may be formed in other manners, which are not limited herein.
2. After the session is successfully established, the MF sends a CoD stream to the IPTV terminal.
3. The IPTV AS performs the individualized matching by obtaining the advertisement insertion time (that is, the gap time) and the advertisement meta data from the CPSF, and obtaining the UE data locally or from other NEs, for example, the UPSF, and matches with the plurality of advertisements to be selected, so as to generate the matching result. Here, the CPSF is used as a meta data storage and management logic unit, which may be separately set or exist in the IPTV AS, SSF, or other NEs.
4. The IPTV AS sends the matching result and the advertisement insertion time to the MF, so as to indicate to execute the content insertion. Here, the IPTV AS may send the massage to the MF via a direct TCP link, for example, by using an HTTP, RTSP, or SOAP command, or through a SIP interface of the IMS Core, for example, by using SIP INVITE, INFO, or REFER. Taking SIP INFO as an example, in the INFO message sent by the IPTV AS to the MF, the Event header field may use an event name dedicated to advertisement insertion, for example, IPTVAdInsertion, the message body carries the advertisement matching result and the advertisement insertion time point in an XML text, and the XML Schema may be described in the following:

```
  <CoDAdInsertionCommand>

  <CoDContentId> CoD_023@cmcc.com </CoDContentId>

  <AdInsertionOffset>1800.000<AdInsertionOffset>

  <AdInsertionLength>900.000<AdInsertionLength>

  <Target>

       <TargetAddr>202.38.46.22</TargetAddr>

       <TargetPort>5760</TargetPort>

  </Target>

  <AdDecision>

       <AdContentId> ad_video_audi_a8 </AdContentId>

       <AdContentSourceURL> ftp://ad.cmcc.com/ad_audi_a8.avi
 </AdContentSourceURL>
 
  </AdDecision>

  <AdDecision>

       <AdContentId> ad_video_nokia_n95 </AdContentId>

       <AdContentSourceURL> ftp://ad.cmcc.com/ad_nokia_n95.avi
 </AdContentSourceURL>

  </AdDecision>

  <AdDecision>

       <Adcontcntld>ad_video_ibm_t60 </AdContentId>

       <AdContentSourceURL> ftp://ad.cmcc.com/ad_ibm_t60.ts
 </AdContentSourceURL>

  </AdDecision>

  </CoDAdInsertionCommand>
```

In this example, the INFO message body carries a CoDAdInsertionCommand element, including the currently viewed CoDContentId (CoD_023@cmcc.com), AdInsertionOffset (1800 seconds, that is, 30 minutes), AdInsertionLength (900 seconds, that is, 15 minutes), Target, and individualized AdDecision (having three matching results in total). The AdDecision carries three pieces of selected advertisement information, including AdContentId, AdContentSourceURL, andAdContentBandwidth.

The message body of the SIP INFO message may be described by using the XML format in the following:

```
  <AdvPolicys>

  <TargetMedia>
 
  <TargetMediaId>CoD_023@cmcc.com </TargetMediaId>

  <TargetMediaType>Unicast</TargetMediaType>

  <UnicastSource>202.114.33.23<</UnicastSource >

  <UnicastSourcePort>4468</UnicastSourcePort>

  <UnicastDestiniation>202.38.46.22</LTnicastDestination>

  <UnicastDestinationPort>5760</UnicastDestinationPort>

  <Protocol>RTP</Protocol>

  <TargetMedia>

  <AdvPolicy>

  <AdsId>

  <AdID>ad_video_audi_a8</AdID>

  <AdvResources>

  <AdvType>Video</AdvType>

  <AdvLocation>ftp://ad.cmcc.com:5760/ad_audi_a8.avi</AdvLocation>

  </AdvResources>

  <AdStartTimeStamp>NPT=1800.000</AdEndTimeStamp>

  <AdEndTimeStamp>NPT=2100.000</AdEndTimeStamp>

  <InsertMode>InsertAndDelayOrignal</InsertMode>

  </AdsId>
 
  <AdsId>

  <AdID>ad_video_nokia_n95</AdID>

  <AdvResources>

  <AdvType>Video</AdvType>

  <AdvLocation>fip://ad.cmcc.com:5760/ad_nokia_n95.avi</AdvLocation>

  </AdvResources>

  <AdStartTimeStamp>NPT=2100.000</AdEndTimeStamp>

  <AdEndTimeStamp>NPT=2400.000</AdEndTimeStamp>

  <InsertMode>InsertAndDelayOrignal</InsertMode>

  </AdsId>

  <AdsId>

  <AdID>ad_video_ibm_t60</AdID>

  <AdvResources>

  <AdvType>Video</AdvType>

  <AdvLocation>ftp://ad.cmcc.com:5760/ad_ibm_t60.ts</AdvLocation>

  </AdvResources>

  <AdStartTimeStamp>NPT=2400.000</AdEndTimeStamp>

  <AdEndTimeStamp>NPT=2700.000</AdEndTimeStamp>

  <InsertMode>InsertAndDelayOrignal</InsertMode>
 
  </AdsId>

  </AdvPolicy>

  </AdvPolicys>
```

In practical applications, the XML text is not limited to the above format, but the common objective is to enable the advertisement inserting unit to obtain enough information, so as to send one or more advertisements in sequence to the target unicast address.
5. When or before the gap time arrives, the MF obtains the advertisement media according to the AdContentId, and when the gap time arrives, the MF splices the CoD stream, pauses sending the CoD stream, records the pause time point, and sends the obtained advertisement media content to the receiving address and the receiving port used by the CoD stream. During the procedure, the pause time point is usually indicated in a media time offset manner (for example, offset for 15 minutes from the beginning of a film) instead of the UTC. The receiving address and the receiving port of the media transmit remain unchanged, and the MF merely inserts the advertisement content to the pause time point. The CoD stream is paused during the time that the advertisement is played.
6. Based on an execution result of step 5, the advertisement content received by the IPTV terminal of the CoD, that is, the first media content, during the gap time period is the second media content.
7. The gap time period ends, the MF stops sending the advertisement content, and recovers playing the CoD stream at the pause time point. The MF obtains the saved pause time point and the first media content starting from the time point, stops sending the advertisement, and sends the content of the first media content to the same transmission parameter (the address and port).
8. Based on an execution result of step 7, the IPTV terminal ends the advertisement insertion and recovers playing the CoD stream.

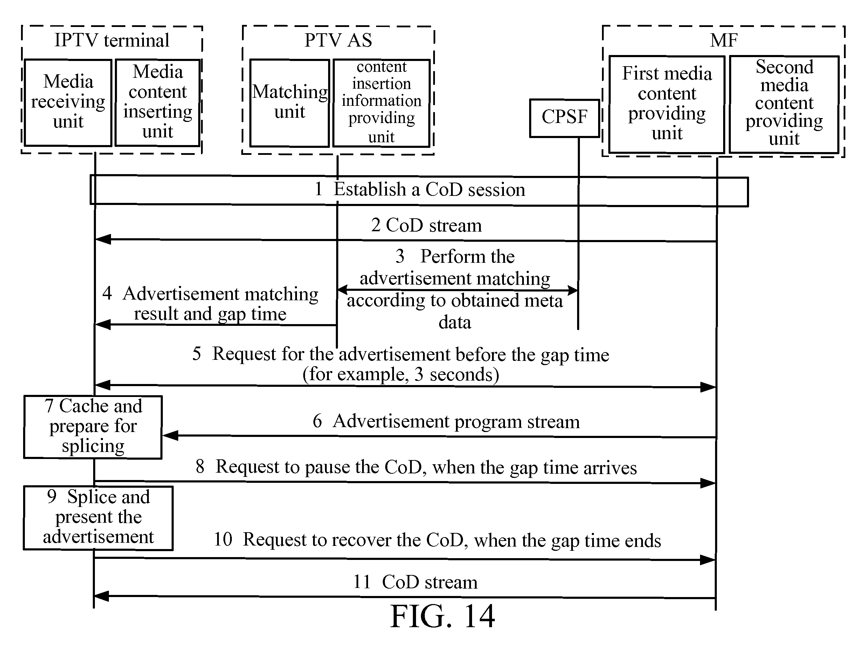

Referring to FIG. 14, in an embodiment, the present invention provides another method for inserting media content in an IPTV.

This embodiment presents another method for implementing the individualized advertisement insertion in the CoD. The IPTV AS sends the matching result to the IPTV terminal. When or before the gap time arrives, the IPTV terminal obtains the advertisement resources through the matching result, caches the advertisement resources when necessary, and implements pause, recovery, and other play control of the first media content through RTSP media control signaling.

In this solution, the IPTV terminal includes a media receiving unit and a media content inserting unit; the IPTV AS includes a matching unit and a content insertion information providing unit; and the MF includes a first media content providing unit and a second media content providing unit. The method includes the following steps:
1. The IPTV terminal establishes a CoD session with the MF, in which the session may be a direct RTSP session or a SIP session established through the IPTV AS.
2. After the session is established, the MF sends a CoD stream to the IPTV terminal, so as to present the CoD content.
3. During the normal program playing procedure, the IPTV AS triggers to push the individualized advertisement. In this step, the matching of the individualized advertisement is completed, that is, an individualized advertisement suitable for the user is selected from the plurality of advertisements to be selected.
4. Before the gap time arrives, the IPTV AS sends the matching result, that is, the AdContentId (the media address of the advertisement, or other IDs), and the advertisement insertion time (gap time) to the IPTV terminal. The matching result may be sent by using INFO, REFER, or MESSAGE in a SIP manner, or sent by using HTTP protocol, or even carried in a success response of establishing the CoD session between the IPTV terminal and the IPTV AS. In this example, the message body carrying the matching result may be described by using an XML text, the XML Schema may be similar to the description in step 4 of FIG. 13, and the objective is to enable the IPTV terminal to obtain enough information from the message delivered by the IPTV AS, so as to obtain the advertisement resources.
5. Before the gap time arrives, the IPTV terminal requests the advertisement resources from the MF according to the obtained advertisement media address. Here, the advertisement resources are obtained in advance, and in practical applications, this step may also be executed when the gap time arrives, which is determined according to the deployment situation, as it is not limited in the solution whether the advertisement resources are obtained in real time. In the procedure, the IPTV terminal may establish an RTSP session of the advertisement with the MF. Thus, the IPTV terminal may perform SDP negotiation with the MF, so as to decide the parameter required by the advertisement transmission channel, that is, the second media transmission parameter, in which the second media transmission parameter is different from the first media transmission parameter.
6. Based on a request result of step 5, the MF sends the advertisement resources to the IPTV terminal requiring the inserted advertisement. In the procedure, the advertisement resources may use the receiving address and the receiving port different from the CoD stream before insertion.
7. The IPTV terminal obtains and caches the advertisement resources before the gap time arrives. Before the gap time arrives, the IPTV terminal may obtain the CoD media and the advertisement media from the same receiving port, or may separately obtain the CoD media and the advertisement media from two receiving ports, only that the CoD media is still normally played, and the advertisement media is cached after being received, so as to provide seamless splicing of the media. Steps 5, 6, and 7 may be performed in advance or performed together with step 8 when the gap time arrives, and in this case, the caching of step 7 may be omitted. The specific implementation is decided by way of deployment.
8. When the gap time arrives, the IPTV terminal requests to pause playing the current CoD from the MF. During the procedure, the IPTV terminal may request the pause from the MF by using a PAUSE message over RTSP, and the pause time point of the CoD may adopt the media time, for example, the 15th minute after playing, which may be recorded by the IPTV terminal or the MF.
9. This step is synchronous with step 8. The IPTV starts to play the advertisement resources from the pause time point of the CoD media.
10. The gap time period ends, and the IPTV terminal requests the MF to recover playing the normal program. For example, a PLAY message over RTSP is adopted, and after the MF obtains the PLAY message, the IPTV terminal recovers playing the normal program from the current pause time point.
11. Based on an execution result of step 10, the IPTV terminal re-obtains the first media content, and views the normal program.

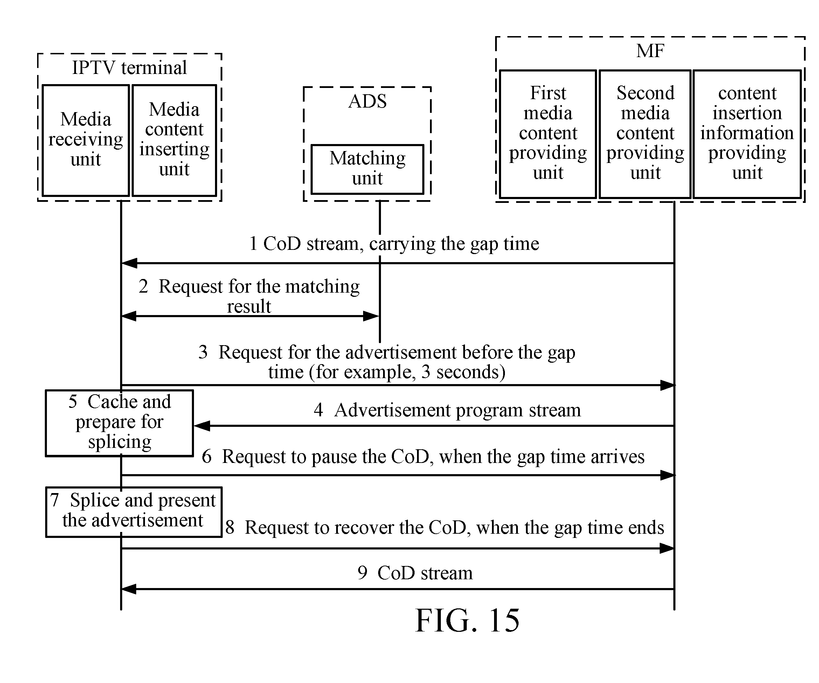

Referring to FIG. 15, in an embodiment, the present invention provides another method for inserting media content in an IPTV.

This embodiment presents another method for implementing the individualized advertisement insertion in the CoD. The advertisement insertion time information is sent together with the first media content from the MF to the IPTV terminal, in which the ADS address is carried, the IPTV terminal requests the matching result from the ADS accordingly, so as to obtain the second media content from the MF, and finally the IPTV terminal splices the content.

In this solution, the IPTV terminal includes a media receiving unit and a media content inserting unit; the ADS includes a matching unit; and the MF includes a first media content providing unit, a second media content providing unit, and a content insertion information providing unit. The method includes the following steps:
1. The IPTV terminal receives the normal program stream from the MF, in which the normal program stream carries the advertisement insertion time (gap time) and other information of the current program.
2. The IPTV terminal requests the individualized AdDecision from the ADS address, and the ADS returns the AdContentId satisfying the individualized setting of the UE in the response, for example, the advertisement media address. Here, the ADS address may be configured by the IPTV terminal or obtained from other NEs (for example, SSF).

Steps 3, 4, 5, 6, 7, 8, and 9 are respectively similar to steps 5, 6, 7, 8, 9, 10, and 11 of the embodiment as shown in FIG. 13, and will not be described herein again.

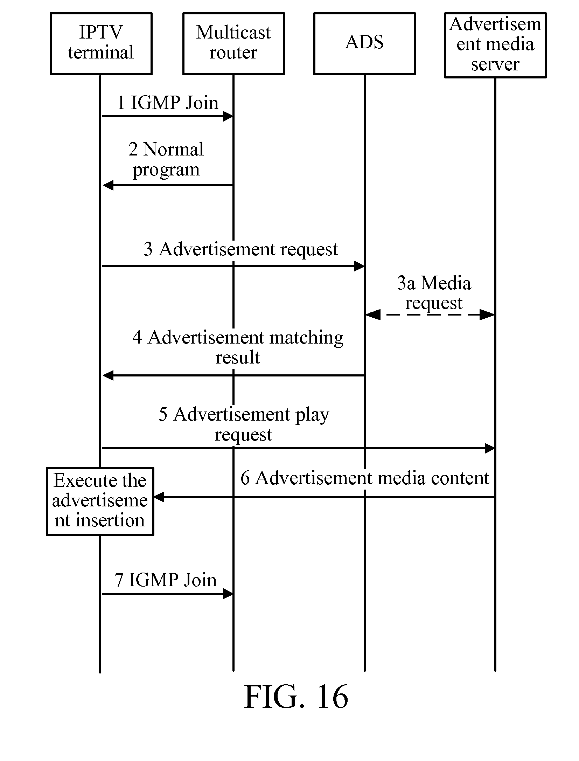

Referring to FIG. 16, in an embodiment, the present invention provides another method for inserting media content in an IPTV, in which the advertisement described in the following is the second media content.

This embodiment presents another method for implementing the group content insertion. In this embodiment, during the procedure of receiving the normal program stream, the IPTV terminal detects the content insertion information, obtains the individualized AdDecision from the ADS according to the information, and obtains the corresponding advertisement media stream. When the advertisement insertion point arrives, the IPTV terminal plays the obtained advertisement media stream instead of the normal program stream, or overlaps and plays the media stream by using small windows, thereby implementing the advertisement insertion.

During the procedure, the IPTV terminal receives the first media content and the second media content simultaneously without exiting the current multicast group, and presents the first media content and the second media content on the display device at the same time. The IPTV terminal includes a media receiving unit and a media content inserting unit; the multicast router includes a first media content providing unit and a content insertion information providing unit; the AS includes a matching unit; and the advertisement media server includes a second media content providing unit.
1. By joining in a multicast tree, the multicast router obtains the multicast stream of the normal program and provides the multicast stream to the IPTV terminal. The IPTV terminal joins in the multicast group by using the IGMP or the MLD protocol. For example, the IPTV terminal joins in the multicast group through IGMP Join (IGMP multicast group join request).
2. The IPTV terminal obtains the normal program stream from the multicast router, and receives the content insertion information carried in the multicast stream. Here, the content insertion information may be a silent prompt signal conforming to SCTE 35, in which the content insertion information at least includes one of the following information: a second media content insertion ID, a insertion time information of second media content, a content type of the inserted second media content, and an ID of an inserted second media content.
3. After obtaining the content insertion information from the multicast normal program stream, the IPTV terminal initiates the advertisement request to the ADS. In this step, the advertisement request may be SIP INVITE (initial session request), which carries the advertisement service ID, that is, the second media content ID, and further includes the second media content insertion information.
4. After receiving the request from the IPTV terminal, the ADS matches and selects the advertisement according to the user preference, the current state, and other information, so as to generate the AdsId for being played, and sends the AdsId as the matching result to the IPTV terminal. The matching result includes one or a combination of the AdContentId, the advertisement source address information, and the advertisement play time information. In this step, the ADS may carry the corresponding matching result in a success response message 200 OK.
3a is an optional step, that is, after receiving the SIP INVITE and completing matching the advertisement, the ADS initiates the SIP INVITE request to the advertisement media server, in which the AdsId is carried, so as to establish a transmission channel from the IPTV terminal to the advertisement media server.
5. The IPTV terminal obtains the advertisement content indicated in the matching result from the advertisement media server. In the procedure, the IPTV terminal initiates a play request to the advertisement media server by using an RTSP PLAY (play request) message, carrying the advertisement content ID and the related media transmission parameter, so as to receive the corresponding advertisement content. Here, the advertisement content is the second media content, and is transmitted by using the second media transmission parameter.
6. When the insertion point arrives, the advertisement media content received by the IPTV terminal is inserted to the current normal program stream and is then presented. In the procedure, the IPTV terminal receives the advertisement content sent by the advertisement media server at the same time without exiting the original multicast group, and presents the two at the same time; or the IPTV terminal exits the original normal program multicast group, and only receives the advertisement content sent by the advertisement media server, so as to present the advertisement on the screen in an exclusive manner.
7. The insertion time period ends, the IPTV terminal removes the transmission channel with the advertisement media server, stops receiving the advertisement content, and recovers the normally played program media. If the IPTV terminal exits the original multicast group in step 6, it is necessary for the IPTV terminal to join in the multicast group again, so as to receive the interrupted normal program media. For example, the IPTV terminal joins in the multicast group through IGMP Join.

In the embodiments of the present invention, unless being specially noted, the SIP message needs to pass through the IMS Core, and particularly pass through the Serve-Call Session Control Function (S-CSCF). Although the IMS Core or the S-CSCF is not mentioned in the flow chart or the description of the steps, it is not represented that the relevant SIP signaling does not pass through the S-CSCF.

In the method, device, and system for inserting the media content in the IPTV according to the present invention, the proper second media content is selected and matched according to the user information of the UE, so that the content is inserted according to individualized requirements of the UE. As compared with the prior art having the program that the broadcasting is only performed for all the audiences in the area, that is, the program can only be inserted according to territorial features of the target UE, the present invention is not only applicable to the program insertion in a BC channel, but also applicable to the individualized program insertion in CoD, and other application scenarios, so that the inserted program satisfies user preferences or user characteristics, thereby improving the user experience. Especially, during an advertisement pushing procedure, different programs may be pushed for users having different characteristics, thereby improving the pushing effect of an advertising agent, and achieving the publicity objective of the advertising agent.

In conclusion, the above are merely preferred embodiments of the present invention. However, the scope of the present invention is not limited thereto. Changes or replacements readily apparent to persons skilled in the prior art within the technical scope of the present invention should fall within the scope of the present invention. Therefore, the protection scope of the present invention is subject to the appended claims.

## Claims

1. A method for inserting media content in an Internet Protocol Television (IPTV), comprising:
receiving content insertion information;
obtaining second media content that matches user information; and
sending the second media content to a User Equipment (UE) according to the content insertion information.

2. The method for inserting media content in an IPTV according to claim 1, wherein the obtaining the second media content matching the user information comprises:
obtaining a matching result comprising an association between the user information and the second media content; and
obtaining the second media content according to the matching result.

3. The method for inserting media content in an IPTV according to claim 2, wherein the obtaining the second media content that matches the user information further comprises:
classifying the user information;
classifying the second media content; and
establishing the association between the user information and the second media content of the same type, as the matching result.

4. The method for inserting media content in an IPTV according to claim 1, 2, or 3, wherein the user information at least comprises one of the following information: description information of first media content currently received by the UE, a user preference, user characteristic information, and UE capability.

5. The method for inserting a media content in an IPTV according to claim 1, 2, or 3, wherein the obtaining the second media content that matches the user information further comprises:
storing the second media content.

6. The method for inserting media content in an IPTV according to claim 1, wherein the content insertion information at least comprises one of the following information: an insertion identifier (ID) of second media content , insertion time information of second media content, a content type of inserted second media content and an ID of inserted second media content; and a manner of sending the content insertion information comprises: sending the content insertion information by using a media plane or sending the content insertion information by using a signaling plane.

7. The method for inserting media content in an IPTV according to claim 3, wherein the matching result at least comprises one of the following information: a second media transmission parameter, a second media content source address, a second media content ID, an ID of the first media content, a second media content insertion indicator, and information indicating an association between the user information and the second media content.

8. The method for inserting media content in an IPTV according to claim 7, wherein the media content insertion indicator at least comprises one of the following information: a second media insertion ID, insertion time, play speed of second media content, and playing format information.

9. The method for inserting media content in an IPTV according to claim 1, 2, 3, 6, 7, or 8, wherein the sending the second media content to the UE according to the content insertion information comprises:
sending the second media content to the UE by using a first media transmission parameter or the second media transmission parameter.

10. The method for inserting media content in an IPTV according to claim 9, wherein the media transmission parameter comprises at least comprises one of the following information : a unicast address plus a port, a multicast address or a multicast address plus a port, a UE ID, and a user group ID.

11. The method for inserting media content in an IPTV according to claim 9 or 10, wherein the sending the second media content to the UE by using the media transmission parameter comprises:
sending the second media content and the first media content to the UE by using the media transmission parameter; or
stopping sending the first media content, and sending the second media content to the UE by using the media transmission parameter.

12. The method for inserting media content in an IPTV according to claim 11, wherein when the first media content and the second media content are sent by using the different media transmission parameters, the sending the second media content to the UE according to the content insertion information comprises:
negotiating the media transmission parameter; and
sending the second media content to the UE by using the media transmission parameter.

13. A device for inserting media content in an Internet Protocol Television (IPTV), comprising:
a media unit for receiving content insertion information, configured to receive content insertion information;
a second media content obtaining unit, configured to obtain second media content that matches user information; and
an inserting unit, configured to send the second media content to a User Equipment (UE) according to the content insertion information.

14. The device for inserting a media content in an IPTV according to claim 13, wherein the second media content obtaining unit comprises:
a matching result obtaining module, configured to obtain a matching result comprising an association between the user information and the second media content; and
a second media content obtaining module, configured to obtain the second media content according to the matching result.

15. The device for inserting a media content in an IPTV according to claim 14, wherein the second media content obtaining unit further comprises:
a user information classifying module, configured to classify the user information;
a second media content classifying module, configured to classify the second media content; and
an associating module, configured to establish the association between the user information and the second media content of the same type, for serving as the matching result.

16. The device for inserting a media content in an IPTV according to claim 13, 14, or 15, wherein the second media content obtaining unit further comprises:
a media storing module, configured to store the second media content.

17. The device for inserting media content in an IPTV according to claim 13, wherein the inserting unit comprises:
a negotiating module, configured to negotiate a media transmission parameter; and
a sending module, configured to send the second media content to the UE by using the media transmission parameter.

18. The device for inserting a media content in an IPTV according to claim 17, wherein the sending module is configured to send the second media content and a first media content together to the UE by using a first media transmission parameter; or configured to stop sending the first media content and send the second media content to the UE by using the first media transmission parameter; or configured to send the second media content to the UE by using a second media transmission parameter.

19. A system for inserting media content in an Internet Protocol Television (IPTV), comprising:
a matching unit, configured to match a second media content for a user, so as to obtain a matching result;
a content insertion information providing unit, configured to provide content insertion information of inserting the second media content to first media content;
a media content inserting unit, configured to insert the second media content to the first media content according to the content insertion information and the matching result; and
a media receiving unit, configured to receive the first media content with the inserted second media content.

20. The system for inserting media content in an IPTV according to claim 19, wherein the media content inserting unit comprises:
a content insertion information obtaining module, configured to obtain the content insertion information;
a matching result obtaining module, configured to obtain the matching result;
a media content obtaining module, configured to obtain the media content according to the matching result and the content insertion information; and
a media content sending module, configured to send the media content obtained by the media content obtaining module to the media receiving unit by using a media transmission parameter.

21. The system for inserting a media content in an IPTV according to claim 20, wherein the media content inserting unit further comprises:
a media storing module, configured to store the second media content.
